# EUROPEAN PATENT SPECIFICATION

(11) **EP 2 867 978 B1**
(45) Date of publication and mention of the grant of the patent: **24.06.2020**
(21) Application number: 13809595.5
(22) Date of filing: 27.06.2013
(51) Int. Cl.: H02J 7/00, H02J 50/12, H02J 50/20

(54) **WIRELESS ENERGY TRANSFER FOR RECHARGEABLE BATTERIES**
DRAHTLOSE ENERGIEÜBERTRAGUNG FÜR WIEDERAUFLADBARE BATTERIEN
TRANSFERT D'ÉNERGIE SANS FIL POUR BATTERIES RECHARGEABLES

(30) Priority: 27.06.2012 US 201213534966; 28.06.2012 US 201213536435; 09.07.2012 US 201213544688
(43) Date of publication of application: 06.05.2015
(73) Proprietor: WiTricity Corporation, Watertown, MA 02472 (US)
(72) Inventor: MCCAULEY, Alexander Patrick, Cambridge, Massachusetts 02141 (US); KURS, Andre B., Chestnut Hill, Massachusetts 02467 (US); KESLER, Morris P., Bedford, Massachusetts 01730 (US); EFE, Volkan, Watertown, Massachusetts 02472 (US); HALL, Katherine L., Arlington, Massachusetts 02474 (US); VERGHESE, Simon, Arlington, Massachusetts 02474 (US)
(74) Representative: Peterreins Schley
(86) International application number: PCT/US2013/048210
(87) International publication number: WO 2014/004843

(56) References cited:
- EP-A1- 2 328 223
- WO-A1-00/62706
- JP-A- 2005 117 748
- US-A1- 2008 291 277
- US-A1- 2010 201 312
- US-A1- 2011 031 928
- US-A1- 2011 050 164
- US-A1- 2011 278 943
- US-B2- 7 932 798
- ANDR? KURS ET AL: "Wireless Power Transfer via Strongly Coupled Magnetic Resonances", SCIENCE, AMERICAN ASSOCIATION FOR THE ADVANCEMENT OF SCIENCE, US, vol. 317, no. 5834, 6 July 2007 (2007-07-06), pages 83-86, XP008154870, ISSN: 0036-8075, DOI: 10.1126/SCIENCE.1143254 [retrieved on 2007-06-07]
- MEHDI KIANI ET AL: "The Circuit Theory Behind Coupled-Mode Magnetic Resonance-Based Wireless Power Transmission", IEEE TRANSACTIONS ON CIRCUITS AND SYSTEMS I: REGULAR PAPERS, IEEE, US, vol. 59, no. 9, 24 January 2012 (2012-01-24), pages 2065-2074, XP011458722, ISSN: 1549-8328, DOI: 10.1109/TCSI.2011.2180446

## Description

### BACKGROUND

### Field:

This disclosure relates to wireless energy transfer to batteries and apparatus to accomplish such transfer.

### Description of the Related Art:

Energy or power may be transferred wirelessly using a variety of known radiative, or far-field, and non-radiative, or near- field, techniques as detailed, for example, in commonly owned U.S. patent application 12/613,686 published on May 6, 2010 as US 2010/010909445 and entitled "Wireless Energy Transfer Systems," U.S. patent application 12/860,375 published on December 9, 2010 as 2010/0308939 and entitled "Integrated Resonator-Shield Structures," U.S. patent application 13/222,915 published on March 15, 2012 as 2012/0062345 and entitled "Low Resistance Electrical Conductor," U.S. patent application 13/283,811 published on October 4, 2012 as 2012/0248981 and entitled "Multi- Resonator Wireless Energy Transfer for Lighting."

Resonators and electronics may be integrated or located next to batteries enabling wireless energy transfer to the batteries allowing wireless charging of the battery packs. With the addition of resonators and control circuitry, batteries and battery packs may wirelessly capture energy from a source and recharge without having to be precisely positioned in a charger. The wireless batteries and battery packs may be wirelessly recharged inside the host device from an external wireless power source without requiring that the device be physically plugged into an external energy supply.

However, resonators placed next to, near, or in close proximity to each other may interact or affect each other's parameters, characteristics, wireless energy transfer performance, and the like. When two or more batteries enabled for wireless energy transfer are placed near one another the resonators of each battery may interact reducing or affecting each batteries' ability to receive wireless energy. In a large number of devices batteries are placed in compartments that position batteries in close proximity to one another. In such devices, without special consideration the wireless enabled batteries may not be able to receive sufficient energy due to the perturbations on the resonators from other batteries.

Further, energy or power may be transferred wirelessly using a variety of known radiative, or far- field, and non-radiative, or near- field, techniques as detailed, for example, in commonly owned U.S. patent application 12/613,686 published on May 6, 2010 as US 2010/010909445 and entitled "Wireless Energy Transfer Systems," U.S. patent application 12/860,375 published on December 9, 2010 as 2010/0308939 and entitled "Integrated Resonator- Shield Structures," U.S. patent application 13/222,915 published on March 15, 2012 as 2012/0062345 and entitled "Low Resistance Electrical Conductor," U.S. patent application 13/283,811 published on October 4, 2012 as 2012/0248981 and entitled "Multi-Resonator Wireless Energy Transfer for Lighting," and U.S. patent application 13/534,966 published on as and entitled "Wireless Energy Transfer for Rechargeable Batteries."

As advanced mobile communication, computing, and sensing devices become more essential, the burden of carrying, operating, and maintaining multiple batteries, fuel cells, and the like, increases. In both civilian and military scenarios, people are often required to carry and operate multiple electronic devices. One or more devices such as headlamps, portable computers, global positioning system devices (GPS), sensors, cameras, radios, flashlights, and the like may all be carried by a person. Each electronic device may require an energy source such as batteries, fuel cells, and the like to provide energy to each or a group of the devices. Large numbers of devices may mean a large number of batteries that may require management and/or monitoring by the user.

In systems where each device has its own energy source, i.e. batteries, the stored energy may be underutilized and may lead to significant or unnecessary extra weight that may need to be carried by the user. With each device or a group of devices having a separate energy source, the energy storage of each device may need to be large enough to power the device in the worst or maximum usage scenario, even if the device is typically used infrequently. As a result in many use scenarios, the user will be underutilizing the carried energy and perhaps carrying too much battery or stored energy capacity.

The underutilization of carried energy may be problematic for weight sensitive devices and applications. Underutilization of energy for a device attached to a helmet, for example, may mean a significant weight penalty that a user has to tolerate on their head. In many applications it is desirable to reduce or eliminate the weight attached to a person's head area since it may cause user discomfort, fatigue, or neck problems.

One way to reduce the burden of multiple batteries and improve their utilization is to use wearable battery packs and/or central energy generators that can provide power to various peripheral devices that are attached to or carried by a person. With one or several central batteries the potable energy may be shared and distributed to the devices that need the power. However, such devices may be tethered to the person's battery pack with cables. For devices such as headlamp, microphones, night vision goggles, and the like, that are carried on a person's head or helmet, the cables may be uncomfortable, limit movement, pose a safety risk (since cables may get snagged or caught on objects and obstacles), and reduce the reliability of the system.

Published Japanese patent application no. JP 2005-117748 discloses a wirelessly chargeable batteries.

Thus what is needed is a wirelessly enabled battery that may be positioned in close proximity to other wirelessly enabled batteries and a better way for energy distribution for person worn peripheral devices.

### SUMMARY

The present invention relates to a wirelessly chargeable battery assembly as set out in claim 1. Other embodiments are described in the dependent claims.

In an assembly of at least two resonator coils the resonator coils are positioned to have weak coupling between one another. The resonators coils are integrated into separate battery structures and are configured to receive energy wirelessly. In one specific aspect the resonators may have a quality factor Q of 100 or more. In one specific aspect a wireless enabled battery may include a cylindrical battery sized enclosure having a first end and a second end with a positive terminal on the first end and the negative terminal on the second end. The wireless battery may include a resonator that forms loops that are coaxial with the cylindrical battery enclosure. The resonator is positioned asymmetrically in the enclosure such that the resonator has weak coupling to another resonator of another battery when the other battery is in near proximity with opposite orientation.

Wireless energy transfer can enable such peripheral devices to be powered from a wearable battery pack or portable power generator, without the safety and ergonomic drawbacks of multiple wired connections that tether the mobile electronic devices, such as a head worn device or helmet to the user.

There is disclosed herein a non-radiative or near-field wireless energy transfer scheme that is capable of transmitting useful amounts of power over mid-range distances and alignment offsets. This inventive technique uses coupled electromagnetic resonators with long-lived oscillatory resonant modes to transfer power from a power supply to a power drain. The technique is general and may be applied to a wide range of resonators, even where the specific examples disclosed herein relate to electromagnetic resonators. If the resonators are designed such that the energy stored by the electric field is primarily confined within the structure and that the energy stored by the magnetic field is primarily in the region surrounding the resonator. Then, the energy exchange is mediated primarily by the resonant magnetic near-field. These types of resonators may be referred to as magnetic resonators. If the resonators are designed such that the energy stored by the magnetic field is primarily confined within the structure and that the energy stored by the electric field is primarily in the region surrounding the resonator. Then, the energy exchange is mediated primarily by the resonant electric near-field. These types of resonators may be referred to as electric resonators. Either type of resonator may also be referred to as an electromagnetic resonator. Both types of resonators are disclosed herein.

The omni-directional but stationary (non-lossy) nature of the near-fields of the resonators we disclose enables efficient wireless energy transfer over mid-range distances, over a wide range of directions and resonator orientations, suitable for charging, powering, or simultaneously powering and charging a variety of electronic devices. As a result, a system may have a wide variety of possible applications where a first resonator, connected to a power source, is in one location, and a second resonator, potentially connected to electrical/electronic devices, batteries, powering or charging circuits, and the like, is at a second location, and where the distance from the first resonator to the second resonator is on the order of centimeters to meters. For example, a first resonator connected to the wired electricity grid could be placed on the ceiling of a room, while other resonators connected to devices, such as robots, vehicles, computers, communication devices, medical devices, and the like, move about within the room, and where these devices are constantly or intermittently device resonator on the helmet even if the person moves, rotates, or tilts their head. The source resonators that provide the best coupling to the device resonator on the helmet may be energized depending on the rotation of the helmet. In another aspect the system may include more than one device resonator, the resonators may be positioned such that at least one resonator has good coupling to the source resonator despite any head rotations of the person wearing the helmet.

There is disclosed herein a non-radiative or near-field wireless energy transfer scheme that is capable of transmitting useful amounts of power over mid-range distances and alignment offsets. This inventive technique uses coupled electromagnetic resonators with long-lived oscillatory resonant modes to transfer power from a power supply to a power drain. The technique is general and may be applied to a wide range of resonators, even where the specific examples disclosed herein relate to electromagnetic resonators. If the resonators are designed such that the energy stored by the electric field is primarily confined within the structure and that the energy stored by the magnetic field is primarily in the region surrounding the resonator. Then, the energy exchange is mediated primarily by the resonant magnetic near-field. These types of resonators may be referred to as magnetic resonators. If the resonators are designed such that the energy stored by the magnetic field is primarily confined within the structure and that the energy stored by the electric field is primarily in the region surrounding the resonator. Then, the energy exchange is mediated primarily by the resonant electric near-field. These types of resonators may be referred to as electric resonators. Either type of resonator may also be referred to as an electromagnetic resonator. Both types of resonators are disclosed herein.

The omni-directional but stationary (non-lossy) nature of the near-fields of the resonators we disclose enables efficient wireless energy transfer over mid-range distances, over a wide range of directions and resonator orientations, suitable for charging, powering, or simultaneously powering and charging a variety of electronic devices. As a result, a system may have a wide variety of possible applications where a first resonator, connected to a power source, is in one location, and a second resonator, potentially connected to electrical/electronic devices, batteries, powering or charging circuits, and the like, is at a second location, and where the distance from the first resonator to the second resonator is on the order of centimeters to meters. For example, a first resonator connected to the wired electricity grid could be placed on the ceiling of a room, while other resonators connected to devices, such as robots, vehicles, computers, communication devices, medical devices, and the like, move about within the room, and where these devices are constantly or intermittently receiving power wirelessly from the source resonator. From this one example, one can imagine many applications where the systems and methods disclosed herein could provide wireless power across mid-range distances, including consumer electronics, industrial applications, infrastructure power and lighting, transportation vehicles, electronic games, military applications, and the like.

Energy exchange between two electromagnetic resonators can be optimized when the resonators are tuned to substantially the same frequency and when the losses in the system are minimal. Wireless energy transfer systems may be designed so that the "coupling-time" between resonators is much shorter than the resonators' "loss-times". Therefore, the systems and methods described herein may utilize high quality factor (high-*Q* ) resonators with low intrinsic-loss rates. In addition, the systems and methods described herein may use sub-wavelength resonators with near-fields that extend significantly longer than the characteristic sizes of the resonators, so that the near-fields of the resonators that exchange energy overlap at mid-range distances. This is a regime of operation that has not been practiced before and that differs significantly from traditional induction designs.

It is important to appreciate the difference between the high- magnetic resonator scheme disclosed here and the known close-range or proximity inductive schemes, namely, that those known schemes do not conventionally utilize high- Q resonators. Using coupled-mode theory (CMT), (see, for example, Waves and Fields in Optoelectronics, H.A. Haus, Prentice Hall, 1984), one may show that a high- Q resonator-coupling mechanism can enable orders of magnitude more efficient power delivery between resonators spaced by mid-range distances than is enabled by traditional inductive schemes. Coupled high-*Q* resonators have demonstrated efficient energy transfer over mid-range distances and improved efficiencies and offset tolerances in short range energy transfer applications.

The systems and methods described herein may provide for near-field wireless energy transfer via strongly coupled high-*Q* resonators, a technique with the potential to transfer power levels from picowatts to kilowatts, safely, and over distances much larger than have been achieved using traditional induction techniques. Efficient energy transfer may be realized for a variety of general systems of strongly coupled resonators, such as systems of strongly coupled acoustic resonators, nuclear resonators, mechanical resonators, and the like, as originally described by researchers at M.I.T. in their publications, "Efficient wireless non-radiative mid-range energy transfer", Annals of Physics, vol. 323, Issue 1, p. 34 (2008) and "Wireless Power Transfer via Strongly Coupled Magnetic Resonances", Science, vol. 317, no. 5834, p. 83, (2007). Disclosed herein are electromagnetic resonators and systems of coupled electromagnetic resonators, also referred to more specifically as coupled magnetic resonators and coupled electric resonators, with operating frequencies below 10 GHz.

This disclosure describes wireless energy transfer technologies, also referred to as wireless power transmission technologies. Throughout this disclosure, we may use the terms wireless energy transfer, wireless power transfer, wireless power transmission, and the like, interchangeably. We may refer to supplying energy or power from a source, an AC or DC source, a battery, a source resonator, a power supply, a generator, a solar panel, and thermal collector, and the like, to a device, a remote device, to multiple remote devices, to a device resonator or resonators, and the like. We may describe intermediate resonators that extend the range of the wireless energy transfer system by allowing energy to hop, transfer through, be temporarily stored, be partially dissipated, or for the transfer to be mediated in any way, from a source resonator to any combination of other device and intermediate resonators, so that energy transfer networks, or strings, or extended paths may be realized. Device resonators may receive energy from a source resonator, convert a portion of that energy to electric power for powering or charging a device, and simultaneously pass a portion of the received energy onto other device or mobile device resonators. Energy may be transferred from a source resonator to multiple device resonators, significantly extending the distance over which energy may be wirelessly transferred. The wireless power transmission systems may be implemented using a variety of system architectures and resonator designs. The systems may include a single source or multiple sources transmitting power to a single device or multiple devices. The resonators may be designed to be source or device resonators, or they may be designed to be repeaters. In some cases, a resonator may be a device and source resonator simultaneously, or it may be switched from operating as a source to operating as a device or a repeater. One skilled in the art will understand that a variety of system architectures may be supported by the wide range of resonator designs and functionalities described in this application.

In the wireless energy transfer systems we describe, remote devices may be powered directly, using the wirelessly supplied power or energy, or the devices may be coupled to an energy storage unit such as a battery, a super-capacitor, an ultra-capacitor, or the like (or other kind of power drain), where the energy storage unit may be charged or recharged wirelessly, and/or where the wireless power transfer mechanism is simply supplementary to the main power source of the device. The devices may be powered by hybrid battery/energy storage devices such as batteries with integrated storage capacitors and the like. Furthermore, novel battery and energy storage devices may be designed to take advantage of the operational improvements enabled by wireless power transmission systems.

Other power management scenarios include using wirelessly supplied power to recharge batteries or charge energy storage units while the devices they power are turned off, in an idle state, in a sleep mode, and the like. Batteries or energy storage units may be charged or recharged at high (fast) or low (slow) rates. Batteries or energy storage units may be trickle charged or float charged. Multiple devices may be charged or powered simultaneously in parallel or power delivery to multiple devices may be serialized such that one or more devices receive power for a period of time after which other power delivery is switched to other devices. Multiple devices may share power from one or more sources with one or more other devices either simultaneously, or in a time multiplexed manner, or in a frequency multiplexed manner, or in a spatially multiplexed manner, or in an orientation multiplexed manner, or in any combination of time and frequency and spatial and orientation multiplexing. Multiple devices may share power with each other, with at least one device being reconfigured continuously, intermittently, periodically, occasionally, or temporarily, to operate as wireless power sources. It would be understood by one of ordinary skill in the art that there are a variety of ways to power and/or charge devices, and the variety of ways could be applied to the technologies and applications described herein.

Wireless energy transfer has a variety of possible applications including for example, placing a source (e.g. one connected to the wired electricity grid) on the ceiling, under the floor, or in the walls of a room, while devices such as robots, vehicles, computers, PDAs or similar are placed or move freely within the room. Other applications may include powering or recharging electric-engine vehicles, such as buses and/or hybrid cars and medical devices, such as wearable or implantable devices. Additional example applications include the ability to power or recharge autonomous electronics (e.g. laptops, cell-phones, portable music players, house-hold robots, GPS navigation systems, displays, etc), sensors, industrial and manufacturing equipment, medical devices and monitors, home appliances and tools (e.g. lights, fans, drills, saws, heaters, displays, televisions, counter-top appliances, etc.), military devices, heated or illuminated clothing, communications and navigation equipment, including equipment built into vehicles, clothing and protective-wear such as helmets, body armor and vests, and the like, and the ability to transmit power to physically isolated devices such as to implanted medical devices, to hidden, buried, implanted or embedded sensors or tags, to and/or from roof-top solar panels to indoor distribution panels, and the like.

Throughout this disclosure we may refer to the certain circuit components such as capacitors, inductors, resistors, diodes, switches and the like as circuit components or elements. We may also refer to series and parallel combinations of these components as elements, networks, topologies, circuits, and the like. We may describe combinations of capacitors, diodes, varactors, transistors, and/or switches as adjustable impedance networks, tuning networks, matching networks, adjusting elements, and the like. We may also refer to "self-resonant" objects that have both capacitance, and inductance distributed (or partially distributed, as opposed to solely lumped) throughout the entire object. It would be understood by one of ordinary skill in the art that adjusting and controlling variable components within a circuit or network may adjust the performance of that circuit or network and that those adjustments may be described generally as tuning, adjusting, matching, correcting, and the like. Other methods to tune or adjust the operating point of the wireless power transfer system may be used alone, or in addition to adjusting tunable components such as inductors and capacitors, or banks of inductors and capacitors.

### BRIEF DESCRIPTION OF FIGURES

Figure 1 is an isometric view of two aligned resonator coils.
Figure 2 is an isometric view of two misaligned resonator coils.
Figure 3 is an isometric view of two resonator coils with orthogonal orientations.
Figure 4 is an isometric view of two aligned planar resonator coils.
Figure 5 is an isometric view of two misaligned planar resonator coils.
Figure 6 is a cutaway view of a wirelessly enabled battery.
Figure 7 is a cutaway view of two wirelessly enabled batteries arranged in an antiparallel configuration according to the invention.
Figure 8 is a plot showing the coupling factor versus the vertical shift between two resonator coils in two wirelessly enabled batteries in close proximity according to the invention.
Figure 9 is a cutaway view of two wirelessly enabled batteries arranged in a parallel configuration according to the invention.
Figure 10 is a diagram of an embodiment of system for wireless energy transfer to a helmet.
Figure 11A is a diagram showing vertically aligned dipole structures and Figure 11B is a diagram showing horizontally aligned dipole structures.
Figure 12 is a diagram of two resonators comprising a conductor wrapped around a block of magnetic material.
Figure 13 is a diagram of an embodiment of a system for wireless energy transfer to a helmet.
Figure 14 is a graph showing energy transfer efficiency as a function of azimuth angle for a helmet wireless energy transfer system.
Figure 15 is a graph showing energy transfer efficiency as a function of coil separation for a helmet wireless energy transfer system.
Figure 16 is a diagram of an embodiment of a system for wireless energy transfer to a helmet using multiple source and device resonators.
Figure 17 is a diagram of an embodiment of a system for wireless energy transfer to glasses using a shoulder mounted source resonator.
Figure 18 is a diagram showing relative source and device resonator dimensions to allow lateral displacement or side to side positioning uncertainty of a vehicle.
Figure 19(a) is a resonator comprising a single block of magnetic material, (b-d) are resonator comprising of multiple separate blocks of magnetic material.
Figure 20(a-c) is an isometric view of resonator configurations used for comparison of wirelss power transfer characteristics between resonators comprising one and more than one separate block of magnetic material.

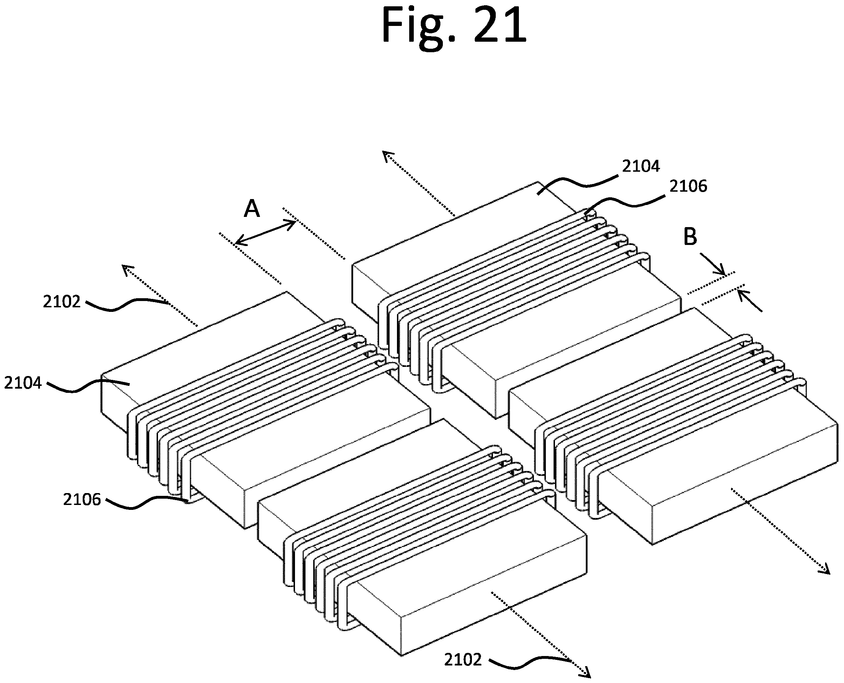

Figure 21 is an isometric view of a resonator comprising four separate blocks of magnetic material each wrapped with a conductor.
Figure 22(a) is a top view of a resonator comprising two blocks of magnetic material with staggered conductor windings, (b) is a top view of a resonator comprising two block of magnetic material shaped to decrease the spacing between them.

### DETAILED DESCRIPTION

### Wireless Battery Configurations

Resonators and electronics may be integrated or located next to batteries enabling wireless energy transfer to the batteries allowing wireless charging of the battery packs. With the addition of resonators and control circuitry, batteries and battery packs may wirelessly capture energy from a source and recharge without having to be precisely positioned in a charger. The wireless batteries and battery packs may be wirelessly recharged inside the host device from an external wireless power source without requiring that the device be physically plugged into an external energy supply.

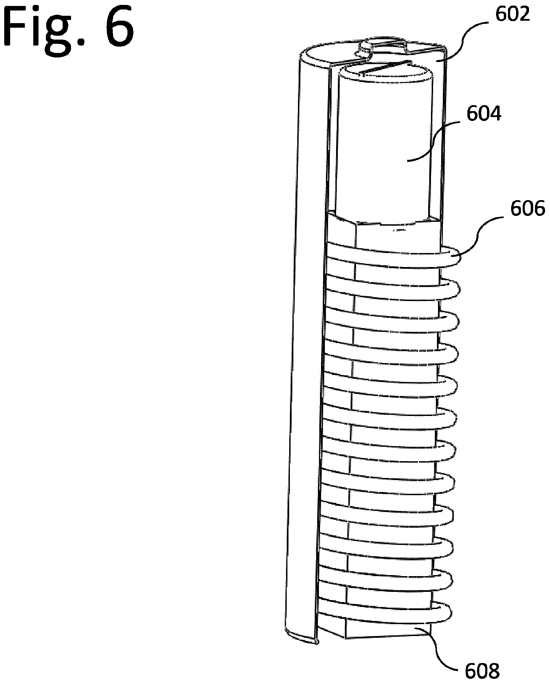

Figure 6 shows one example of a wireless battery comprising a magnetic resonator. The example battery comprises a resonator coil 606 wrapped around an optional block of magnetic material 608. The block of magnetic material 608 may be hollow and may house power and control circuitry (not shown) and a rechargeable battery 604 which may be recharged by the energy captured by the magnetic resonator. The magnetic resonator does comprise inductors and capacitors and does comprise a coiled inductive element 606. In this example, the wireless battery is in the form factor 602 of a traditional AA battery and may be placed into devices which normally accept a traditional AA battery. The wireless AA battery may be charged from an external wireless energy source while in the device. In embodiments the wireless AA battery may capture energy from an external wireless energy source and deliver the power directly to the host device.

Wirelessly rechargeable batteries, such as the wireless AA battery shown in Fig. 6 may be placed in devices in multiple configurations. Some devices may need only a single battery while other devices may require two or more batteries which may be positioned in close proximity. Resonators in wireless batteries may therefore be required to operate individually or in close proximity to resonators in other batteries.

Resonators placed next to, near, or in close proximity to each other may interact or affect each other's parameters, characteristics, wireless energy transfer performance, and the like. Parameters such as inductance, resistance, capacitance, and the like of the resonators and components of the power and control circuitry of the resonator may be changed or affected when a resonator is placed in close proximity to another resonator. The effects on parameters of resonators and their power and control circuitry may affect the performance of the wireless energy transfer between the resonators in the wireless batteries and the external wireless energy source.

For example when a resonator is placed in close proximity to another resonator, the inductance of the resonator loop may be affected or perturbed. The change in inductance may perturb or detune the resonant frequency of the resonator compared to if the resonator was isolated or far away from any other resonator. Detuning of the resonant frequencies of resonators transferring energy may reduce the efficiency of wireless energy transfer. If the detuning of the frequencies is large enough, the efficiency of energy transfer may be degraded and may decrease by 10% or 50% or more. Although a change in inductance was used in this example, it should be clear to those skilled in the art that other changes in parameters of the resonator due to proximity of other resonators may also affect the performance of wireless energy transfer.

In applications where wireless batteries are placed in close proximity for charging or powering devices, the proximity of resonators of neighboring batteries may affect the parameters of the resonators, affecting their ability to receive energy from an external wireless energy source (i.e. reducing the amount of power or efficiency of wireless energy transfer). In embodiments it may be desirable to have a cluster or a number of resonators in near proximity without impacting or minimally impacting the parameters of wireless energy transfer to each of the individual resonators or to the resonator ensemble.

In some embodiments it may be desirable to have resonators operate and transfer energy with similar parameters when a resonator is far away from other resonators or other wireless batteries as when in close proximity with other resonators of other wireless batteries. In the case of wireless batteries, for example, some devices may use only one wireless battery while other devices may use two or more wireless batteries arranged in close proximity. In embodiments it may be preferable if the same wireless battery could receive energy from an external source with substantially the same performance and parameters when a single battery is charged as when a cluster or a pack of batteries positioned in close proximity are charged.

The inventors have discovered several methods and designs for maintaining the parameters of wireless energy transfer when a wireless battery is charged alone or in a group in close proximity with other wireless batteries. In some embodiments, the wireless batteries may include an active tuning capability to maintain their parameters and compensate for any perturbations that may be caused by other resonators in close proximity. In other embodiments the resonators in wireless batteries may be statically tuned to compensate for perturbations due to the resonators of other wireless batteries in close proximity. In another embodiment, the resonators in the wireless batteries may be positioned to reduce or minimize the perturbations on the resonators of neighboring batteries even when they are in close proximity.

### Reducing Effects of Perturbations with Static Resonator Tuning in Wireless Batteries

According to the invention resonators and resonators assemblies are designed and tuned to function in close proximity to other resonators. Resonators or resonator assemblies may be designed or tuned to have the desired parameters when in the near proximity of other resonators. For example, resonators and resonator assemblies may be designed and pre-tuned such that any perturbations due to the proximity of another resonator perturbs the parameters of the pre-tuned resonator to the desired value and/or operating point. In embodiments, a device resonator may be pre-tuned to have a resonant frequency that is lower than a source resonator when it is by itself but that may increase to match the source resonator frequency when another resonator of another wireless battery is brought close to the device resonator. The parameters of a resonator may be pre-tuned such that the parameter values are lower or higher than the desired or optimal parameters for energy transfer when the resonator is not in close proximity to other resonators. The parameters of a resonator may be pre-tuned such that a perturbation due to another resonator or another wireless battery in close proximity changes the non-optimal parameters of the resonator to the desired parameters and/or to optimal parameters.

Resonators in wireless batteries may be designed with a resonant frequency that is lower or higher than the desired operating frequency. The lower or higher frequency may be designed to differ from a desired operating frequency by the same amount that a perturbation due to another resonator is expected to cause. A resonator designed with an intrinsic resonant frequency may therefore reach a perturbed resonant frequency that is the desired operating frequency for the wireless power system.

A cluster of wireless batteries, each with its resonator detuned from the desired operating frequency when in isolation may be placed together in a pack or arranged in close proximity. The perturbations caused by the resonators of other wireless batteries may detune each resonator to the desired parameters for wireless energy transfer allowing each resonator of each wireless battery to receive energy from an external source despite the perturbation.

Static detuning of resonators, pre-tuning, or tuning of resonators to compensate for some or any perturbations due to other resonators may be advantageous in applications where the relative position and configuration of different resonators is fixed, partially fixed, or relatively static. In an environment or application where the resonators and resonator assemblies may be arranged or positioned in more than one configuration relative to other resonators, the static tuning approach may result in non-constant characteristics of performance since one configuration may perturb the resonator differently than another configuration of resonators.

### Reducing Effects of Perturbations with Active Resonator Tuning in Wireless Batteries

In another embodiment, resonators and resonator assemblies may be designed with an active tuning capability. In embodiments the resonator or resonator assembly inside wireless batteries may include tunable components that may adjust the parameters of the resonators and wireless energy transfer to maintain the parameters of wireless energy transfer in the presence of perturbations. Tunable components may include capacitors, inductors, amplifiers, resistors, switches, and the like, which may be continuously or periodically adjusted to maintain one or more wireless energy transfer parameters. For example, the resonant frequency of a resonator may be adjusted by changing the capacitance coupled to the resonator coil. When the resonator's resonant frequency is perturbed from its nominal value due to the presence of another resonator the resonant frequency may be adjusted by adjusting the capacitor. Active tuning may be used to compensate for different perturbations that may be caused by different orientations and positioning of the resonators.

In embodiments, active tuning of resonators in wireless batteries may allow a wireless battery to have similar parameters when it is used as a single battery in a device, as when in a cluster or pack of resonators wherein the parameters of the resonators may be perturbed by other resonators of the wireless batteries.

### Reducing Effects of Perturbations with Positioning in Wireless Batteries

According to the invention resonators may be located in close proximity to one another with minimal or acceptable effect on resonator parameters if the resonators are designed and positioned to have weak coupling between each other. Resonators may be in close proximity with weak coupling if the resonators are oriented and positioned within or close to positions with low mutual inductance ("null spots") or areas with low magnetic field amplitudes.

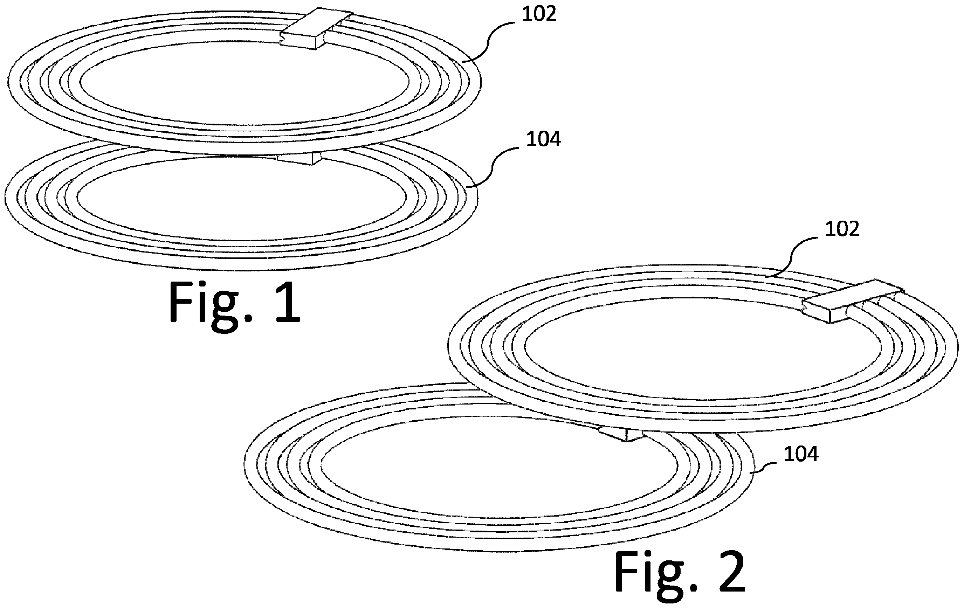

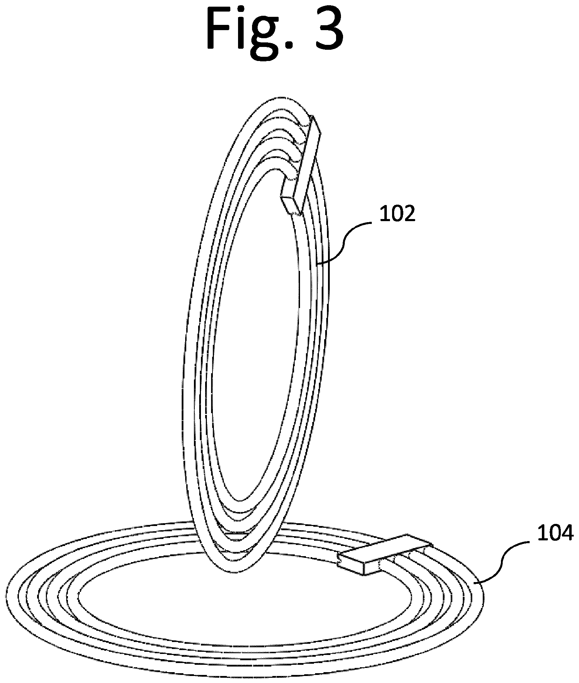

For example, consider two capacitively loaded loop resonators comprising concentric loops of a conducting material as the inductive elements of the resonators. When two such resonator loops are brought in close proximity in orientations and positions with strong coupling they will have an effect on each other's parameters. For example, if the resonator coils 102,104 are placed in close proximity and oriented coaxially as depicted in Fig. 1, the presence of the other resonator may affect the inductance of the resonator coil and may ultimately perturb its resonant frequency. However, resonator coils may be in close proximity with decreased perturbations by positioning and orienting the resonators such that they have weak coupling. For example, when the resonator coils 102, 104 are repositioned to be off center from one another as depicted in Fig. 2, their coupling coefficient and the strength of the perturbations may decrease. In another example, the two resonator coils may be positioned orthogonally to one another to reduce coupling and/or perturbations as depicted in Fig. 3. Positioning the two resonators such that they have low coupling with one another reduces the perturbations each resonator causes to the other. In the offset configuration of Fig. 2 or the orthogonal configuration of Fig. 3, the two resonators may be used to efficiently receive energy from an external energy source (not shown) without the need for static detuning or active tuning of the resonators to compensate for perturbations.

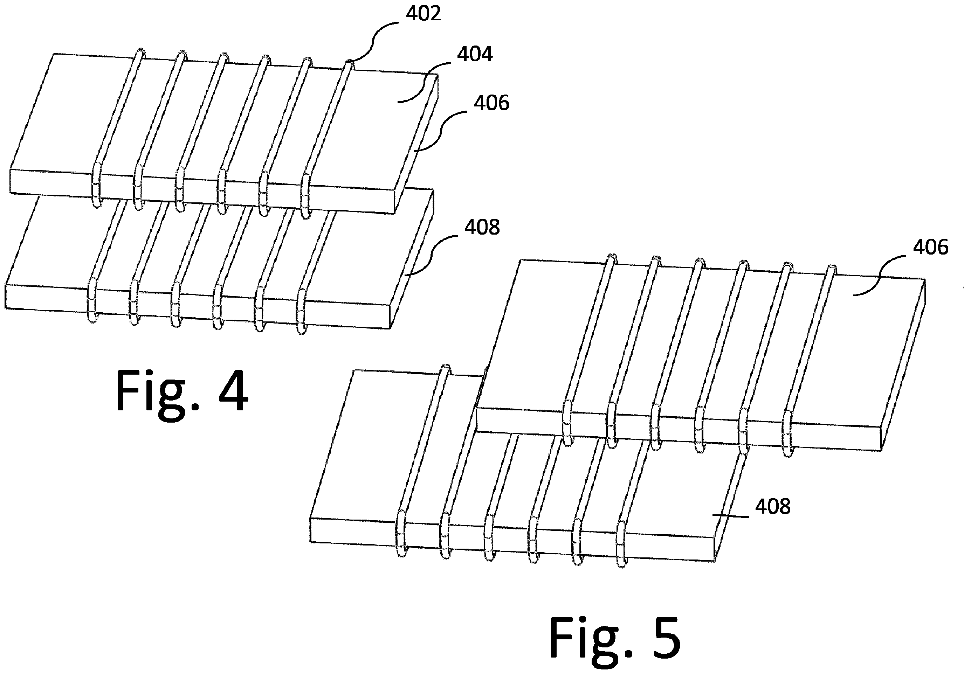

Similar positioning techniques may be used with other types or designs of resonators such as for planar resonator coils comprising electrical conductors 402 wrapped around blocks of magnetic material 404. When two such resonators 406, 408 are placed in close proximity as depicted in Fig. 4 they will have strong coupling and may perturb each other's parameters. However if the resonators 406, 408 are misaligned as depicted in Fig. 5, the coupling between the two resonators may decrease and the perturbations on the parameters of the resonators may also decrease.

According to the invention, to reduce the effects of perturbations on resonators in near proximity, the resonators are purposefully positioned such that they have weak coupling. Resonators generally have weak coupling in areas with low magnetic field strengths and it areas where the directionality of the flux lines crossing the inductive elements is varying. For example, in the resonator arrangement shown in Figure 2, there exists a null in the coupling coefficient between the two resonators when the amount of flux generated from within one inductive element and crossing the other, is equal and opposite to the amount of flux generated outside of that one inductive element and crossing the other. Resonators with this type of positioning may be referred to as being in a "null spot" or "null region". The exact location and orientation where resonators and resonator assemblies have weak coupling may be determined experimentally, numerically, analytically, and the like.

Placement of resonators in areas of weak coupling may allow a resonator to operate with similar performance and parameters when far away from other resonators as when in close proximity with other resonators without requiring static detuning and/or active tuning. In embodiments placement of resonators in areas of weak coupling may allow a resonator to operate with similar performance and parameters when far away from other resonators as when in close proximity with other resonators with a reduced or limited tuning capability.

In embodiments, the positioning technique which reduces perturbations on resonators in near proximity to each other may decrease the required tuning range of the resonators with active tuning and may reduce the cost and complexity of such systems.

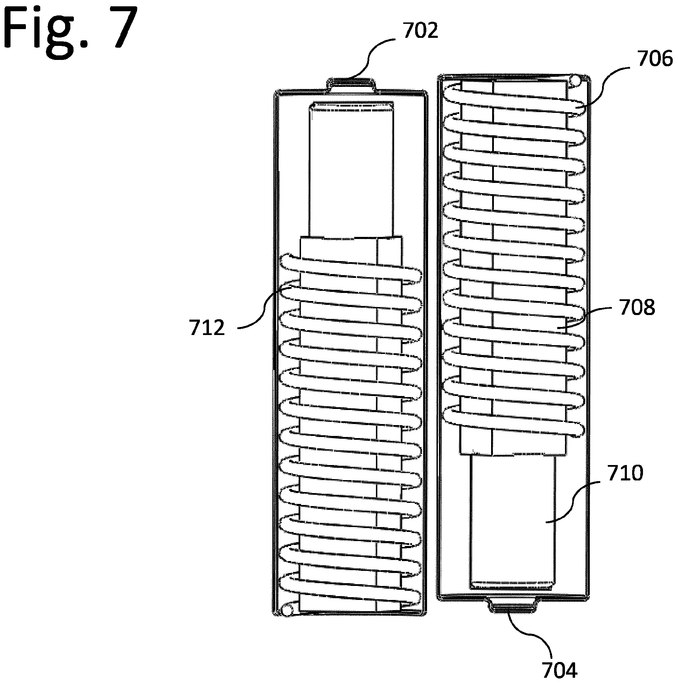

In many devices, batteries are fixed or oriented in a predictable configuration and/or orientation. In devices using AA batteries for example, multiple batteries are often arranged in parallel, and positioned next to one another with alternating polarities (the antiparallel configuration) of their terminals 702, 704 as shown in Fig. 7. The resonator of a AA battery may be designed with certain sizes, positions, and orientations within the battery to reduce or minimize the perturbations on the resonators inside the batteries when two or more batteries are placed in close proximity to one another in particular orientations.

According to the invention, to reduce perturbations, resonators coils 706 and magnetic materials 708 in batteries are sized and positioned asymmetrically inside a battery such that when two batteries are positioned in close proximity with reversed polarities the two resonator coils 706, 712 are misaligned. The misalignment of the resonators are designed such that when in close proximity to each other, and in the orientation shown in Figure 7, the neighboring misaligned resonators are in the areas of weak coupling between one another similar to the structures depicted in Figs. 2 and 5, and therefore may have reduced or small perturbations on the parameters of the resonators.

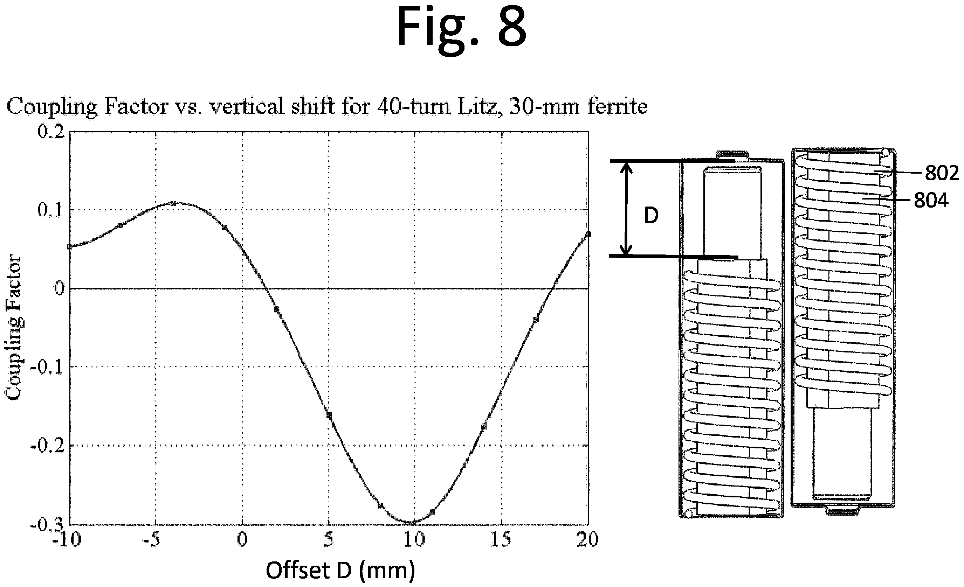

For example, the coupling factor plot versus asymmetry of one
embodiment of resonator coils in an AA battery form factor is shown in Fig. 8 for the position and configuration of batteries shown on the right of Fig. 8. The plot shows the coupling factor, k, between two resonators as the offset (or misalignment) D between the resonator coils 802 and magnetic materials 804 is varied. Note that at approximately 1.3mm of displacement, D, the coupling factor reaches zero. At this node point, or null point, or point of zero coupling, the parameters of the resonator are practically unaffected by the presence of the resonator in the neighboring battery. In this example, the resonant frequency of the resonators stayed substantially the same when the resonators were in the configuration shown in Fig. 8 as when they were separated from each other by significant distances.
Likewise, when the resonators were displaced by 1.3 mm, there was very little change in the quality factors of the resonators when the batteries were in isolation (Q∼118) and in the configuration shown in Fig. 8 respectively (Q∼108).

The relatively asymmetric alignment of the resonators in the batteries allows the resonators to function and capture energy from an external source resonator with high efficiency in the configuration of multicell packs and in independent configurations where the batteries are not in near proximity to other resonators. Therefore, a single battery design may be used in multiple configurations with similar wireless energy transfer characteristics. Such a design is advantageous as it preserves at least one of the desirable characteristics of a known battery form factor such as a AA, which is the ability to place batteries in multiple positions within their host devices, and to know that battery performance is predictable in single-battery and multi-battery arrangements.

Multicell battery configurations may have other configurations than the one shown in Fig. 7. For example, in some applications all the batteries may be aligned with the same polarity such that all of the positive terminals are on the same side. The position and design of the batteries may be adapted to operate in these configurations.

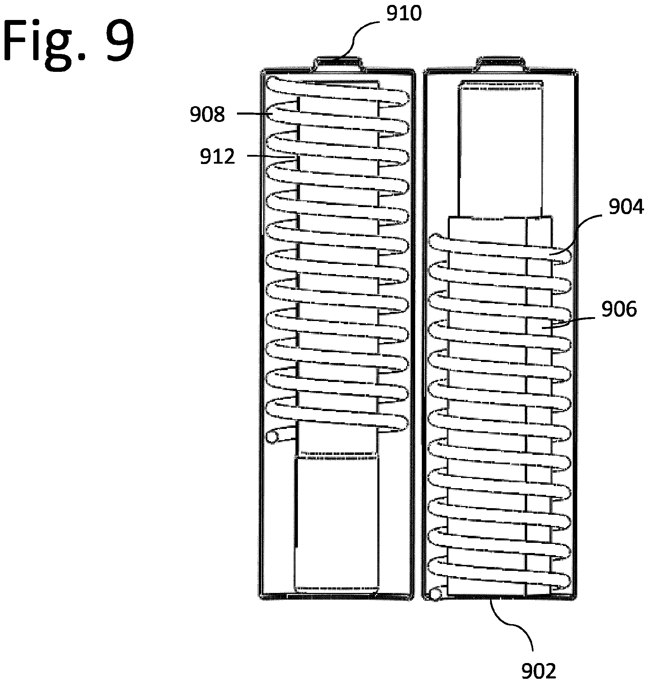

In one embodiment, the batteries may come in two or more configurations depending on the orientation and position of batteries in the host device battery compartment. For example, in the configuration where all the batteries are aligned with the same polarity facing in one direction, two different battery configurations may be used. One type of battery may have the resonator coil 908 and magnetic material 912 positioned asymmetrically
towards its positive terminal 910 while a second type of battery may have the resonator coil 904 and magnetic material 906 positioned asymmetrically towards the negative terminal 902 of the battery as shown in Fig 9. In such embodiments, the batteries may comprise additional markings to distinguish them. For example, the batteries may be color coded or the end terminals may be shaped to indicate whether the batteries are designed to operate as positioned in Figure 7 or as positioned in Figure 9. One of ordinary skill in the art will understand that a variety of marking schemes may be used to distinguish the battery types, and that a number of battery types may be desirable to address common multi-cell configurations, orientations and positions. Alternating the batteries in a multi-cell configuration may allow the resonators to be in the weak coupling regions of other resonators when in close proximity to other resonators.

In other embodiments the position of the resonator may be adjustable allowing the user to position the resonator up or down on the battery. The resonator may be mounted on a movable sleeve for example with two positions. For multi-cell configurations with alternating orientations of batteries, the sleeves with the resonator may be all positioned on one end of the battery. For multi-cell configurations with the batteries all oriented in the same direction the position may be alternated for each alternate battery.

In other embodiments, batteries may be equipped with metallic and/or magnetic shields to prevent their interaction with neighboring batteries or devices. These shields may be oriented so as to prevent the presence of another battery from changing the resonant frequency of the first battery and vice versa. These shields may be asymmetric so that the user may rotate the batteries so as to shield from neighboring batteries, but not to shield from the power source.

In yet other embodiments batteries may have configurable or switchable polarities. In embodiments the positive and negative ends or terminals of a battery may be reversed. Resonator position and orientation inside batteries may be fixed in an asymmetric position and the relative position of the resonators in close proximity to one another may be alternated by rotating the batteries. The appropriate polarity of the terminals may be chosen depending on the requirement of the application with an adaptor, switch, and the like.

In embodiments, the batteries may comprise automatic positioning mechanisms that automatically move the resonators within the battery casing so that they are positioned for maximum energy transfer efficiency when in close proximity to other resonators. For example, the resonators may comprise permanent magnets that are positioned to repel each other and move the resonators of adjacent batteries away from each other. In other embodiments, the batteries may comprise field sensors, voltage sensors, current sensors, power sensors, and the like, and these sensors may be used in positioning systems to move the magnetic resonators within the battery structure to improve wireless power transfer efficiency. In yet other embodiment, the sensors may be used to give feedback to a user installing the batteries to twist or turn the battery packs, or somehow alter the relative positions and orientations to improve wireless energy transfer performance. In embodiments, sensors may be used to indicate to a user that certain battery configurations are problematic.

The asymmetrical positioning of resonators in batteries may be used in various battery styles and sizes. Although the example described an AA battery
configurations those skilled in the art will appreciate that techniques may be adapted to any number of different battery styles and may be adapted to various arrangements of battery packs comprising multiple individual batteries.

### Other applications

Those skilled in the art will appreciate that the techniques described limiting perturbations in batteries in close proximity may be used in many other applications. The techniques may be used in any applications where multiple device resonators may be placed in close proximity or in a proximity close enough that they can affect each other's parameters.

For example, multiple devices with wireless device resonators may need to be positioned to reduce the perturbations on other like devices in near proximity when multiple devices are placed on or near a wireless energy source. In embodiments the source may be configured to have slots, channels, markers, outlines, and the like that force or position multiple devices in positions and orientations where the resonators of each device has weak coupling to other device resonators in near proximity.

It is to be understood that close proximity or close to one another is not an absolute measure of distance but depends on the relative size of resonators, the types of resonators, their power transfer levels and the like. In embodiments, resonators may be considered in close proximity when they are separated by less than one characteristic size of the largest resonator in the system. In other embodiments, resonators may be considered in close proximity when they are separated by two or by three characteristic sizes of the largest resonator in the system. In some embodiments resonators may be considered to be in close proximity when the resonators are close enough to perturb each other's parameters to affect efficiency of wireless energy transfer by at least 5%.

It is to be understood that weak coupling as used in this disclosure does not refer to an absolute coupling metric but a relative coupling value. An area of weak coupling should be understood to be an area where the coupling is at least two times smaller than the largest possible coupling for the two resonators at the fixed separation distance.

A wireless energy transfer system may be used to wirelessly transfer energy from one or more central batteries and/or fuel cells and/or solar panels and/or other types of energy packs worn on a vest, backpack, harness, shirt, pant, belt, coat, or any type of clothing and the like, to a head worn or helmet mounted electric or electronic device. The wireless energy transfer system may use strongly-coupled magnetic resonators. The resonators may have a high quality factor Q>100. The two resonators exchanging energy by have sqrt(Q1Q2)>100. The system comprises at least one wireless energy source resonator, which might be embedded or attached to the user's equipment, clothing, vest, backpack and the like. The source resonator generates an oscillating magnetic field which may be received by one or more energy capture device resonators which may be integrated with the helmet or device. In embodiments 5 watts or more of power may be transferred across a gap of 10 cm or 18 cm or more from a source resonator to a device resonator. In embodiments, repeaters may be used in the wireless energy transfer system.

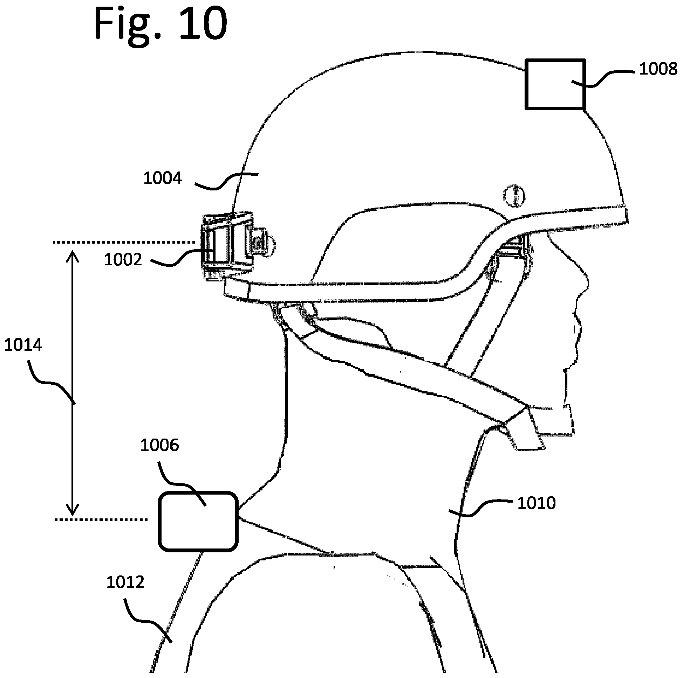

An example embodiment showing one configuration of the system is shown in Fig. 10. In the exemplary embodiment, energy is transferred wirelessly to an energy capture device resonator 1002 mounted on the back of a helmet 1004 from a source resonator 1006 mounted on a vest 1012 of a person 1010. The source resonator 1006 may be energized by a battery (not shown) carried by the person 1010. The source resonator 1006 generates an oscillating magnetic field that induces an electric current in the energy capture device resonator 1002. The electrical energy induced in the device resonator 1002 may be used to energize electric or electronic devices 1008 mounted or attached to the helmet 1004. Thus energy is transferred wirelessly across a gap 1014 to power devices 1008 on a person's head without cables between the device and the main battery carried by the person 1010.

The wireless energy transfer is based on carefully designed, high quality magnetic resonators, strongly coupled to other magnetic resonators, so that electric power is selectively and efficiently transferred from one resonator to another, via a magnetic field, with very little power lost or dissipated to other near-by off-resonant or non-resonant objects. In the system it may be necessary to ensure energy transfer during changes in resonator
positioning or movement due to the movement of a person's head, changes in the mounting of the resonators and the like.

In embodiments the system may use any number of resonators and resonator structures. A large number of suitable resonator structures have been described in U.S. Patent Application 12/789,611 Published as US Publication Number 2010/0237709A1 on Sep. 23, 2010. For example, the so called planar resonator structures comprising an electrical conductor wrapped around a block of magnetic material or various configurations may be used. Likewise many different forms of capacitively loaded loop resonators with or without shielding may be employed. In embodiments the types of resonators chosen, their orientation, size and the like may depend on the details of the application and the desired offset tolerance, size limits, power transfer efficiency, target weight specifications and the like.

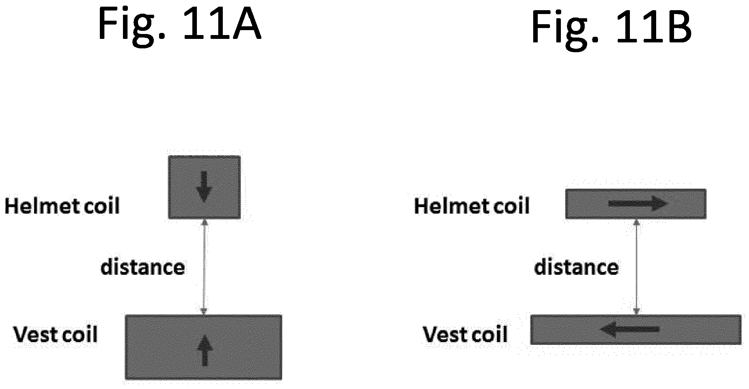

In embodiments various coil configurations with different dipole moments and orientations may be effective for person mounted (e.g. vest) to helmet energy transfer. In embodiments the resonators may be oriented with two different dipole moment orientations and configurations. Fig. 11 A and Fig. 11B show two different dipole orientations of resonators, vertically aligned, and horizontally aligned. Fig. 11 A shows a configuration with vertically aligned dipole moments. Fig. 11B shows a configuration with horizontally aligned dipole moments. The benefit of the parallel or horizontally aligned configuration is that both ends of the magnetic dipole resonator on the vest can couple to the helmet resonator. The parallel configuration may also have an advantage in its size, shape, and weight. In an exemplary environment, a coupling coefficient of k = 0.02 was achieved with a helmet-resonator weight of 0.17 kg and a vest-resonator weight of 1.1 kg. Also, the shape of each resonator may be more suitable for integration with both the helmet and the vest than the vertical configuration.

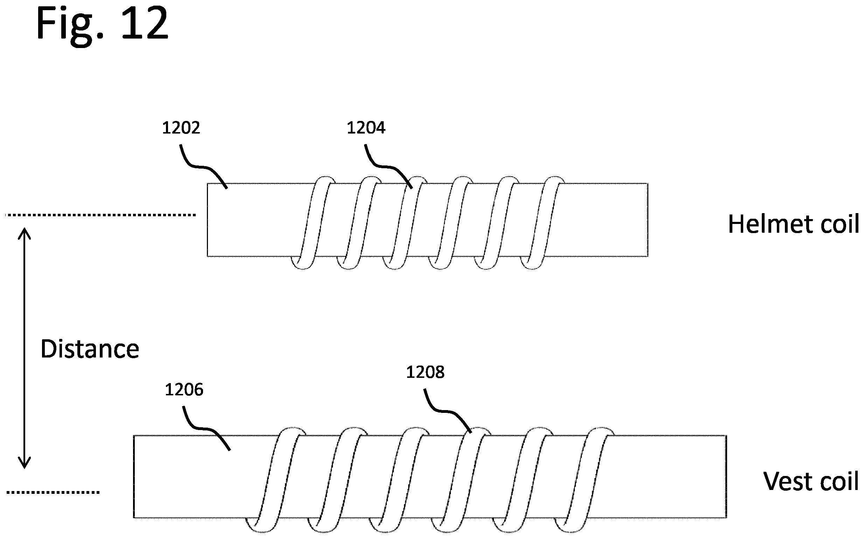

To ensure adequate energy transfer from a source resonator on the body to a device resonator on the head and/or helmet, over a range of resonator offsets and distances with a constraint on size and weight of the resonators, the resonators may preferably be oriented with horizontally aligned dipole moments. Resonators with horizontally aligned dipole moments may be a variant of the so called planar resonator structures. An embodiment of the system with planar resonator structures is shown in Fig. 12. The helmet mounted device resonator coil (Helmet coil) and the vest mounted source resonator coil (vest coil) both comprise a conductor 1204, 1208 wrapped around a block or core of magnetic material 1202, 1206. In this configuration the two resonators have their dipole moments in the horizontal direction or parallel to one another.

An example embodiment comprising horizontally aligned resonators was used to demonstrate the feasibility and performance of the system. In the example
embodiment, the energy capture device resonator mounted on the helmet comprises 10 turns of 1054/44 AWG Litz wire wound around 160 g of 3F3 ferrite material and has a Q >200. The vest-mounted resonator contains 215 g of ferrite encased in a polymer sleeve that is wound with 10 turns of the same type of Litz wire to form planar type resonators similar to that shown in Fig. 12 and has a Q>200.

A lithium ion battery back worn in the vest of the user is used as the power source for the electronics board that houses the power and control circuitry for the source resonator. The helmet-mounted resonator is connected to a small device board with a rectifier and output voltage regulator. The output regulator was set for 5 Vdc and connected to a LED headlamp for demonstration purposes.

The ferrite material used for both the helmet and vest resonators consists of small rectangular tiles that were stacked to make resonators in a parallel-piped shape. Shaped resonators may be fabricated that conform to the natural contours of both the helmet and the vest. This could be accomplished either by grinding angled faces on the individual tiles or by sintering magnetic powder in a custom mold.

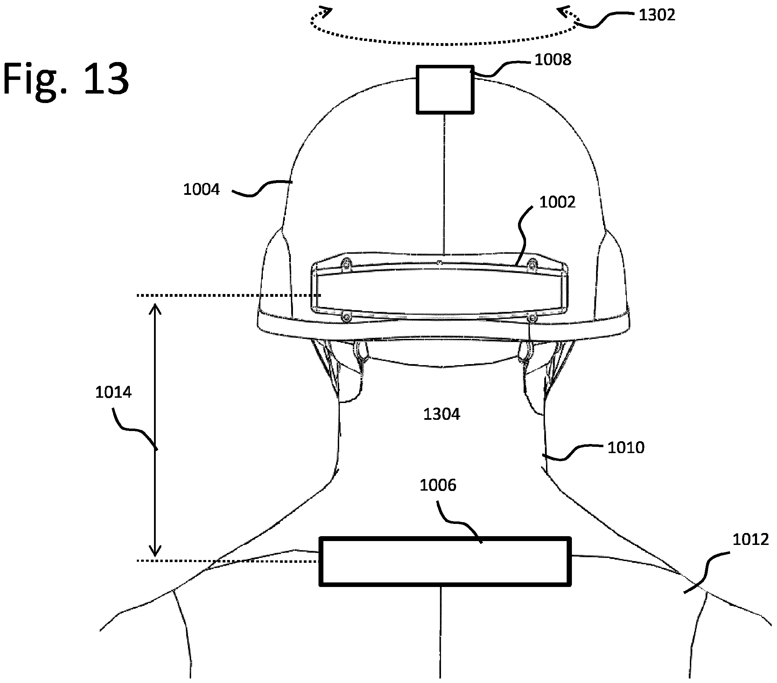

Fig. 13 shows the experimental configuration used to measure the efficiency and power as a function of head position. The source resonator 1006 was mounted on the vest 1012 worn by the person 1010. The device or energy capture resonator 1002 was mounted on the back of a helmet 1004. The energy captured by the device resonator was used to power a headlamp 1008 on the helmet via a wire. The separation distance 1014 as well as the azimuth angle or the head rotation angle 1302 was modified while parameters of the wireless energy transfer were measured.

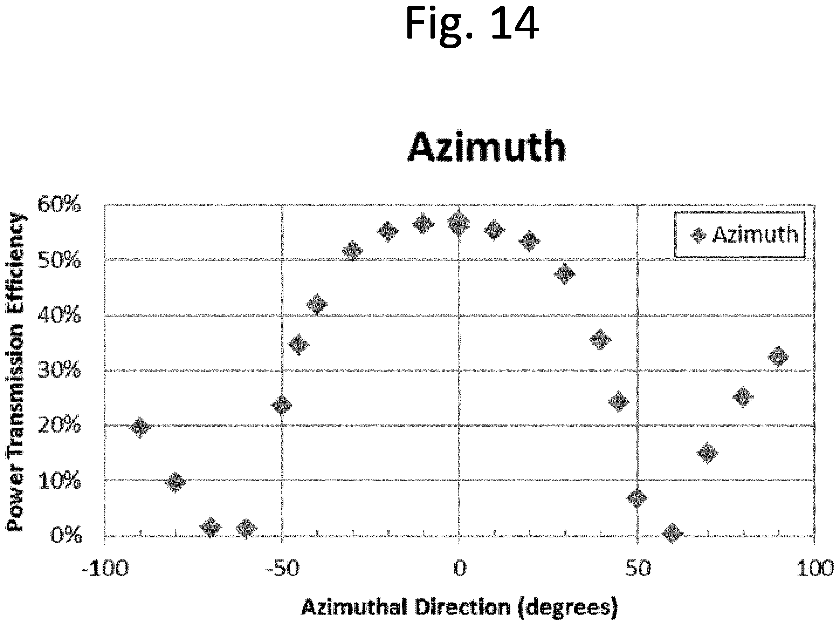

The efficiency of energy transfer as a function of the azimuth rotation for 12 cm separation distance between the source and device resonators is shown in Fig. 14. When the resonators are aligned the efficiency of energy transfer reaches almost 60%. A null in the coupling coefficient occurs when the head swivels approximately 60 degrees in azimuth and is manifested as a drop in efficiency of energy transfer in the figure. The null may be extended or moved to larger angles by enlarging the resonators along their dipole moments.

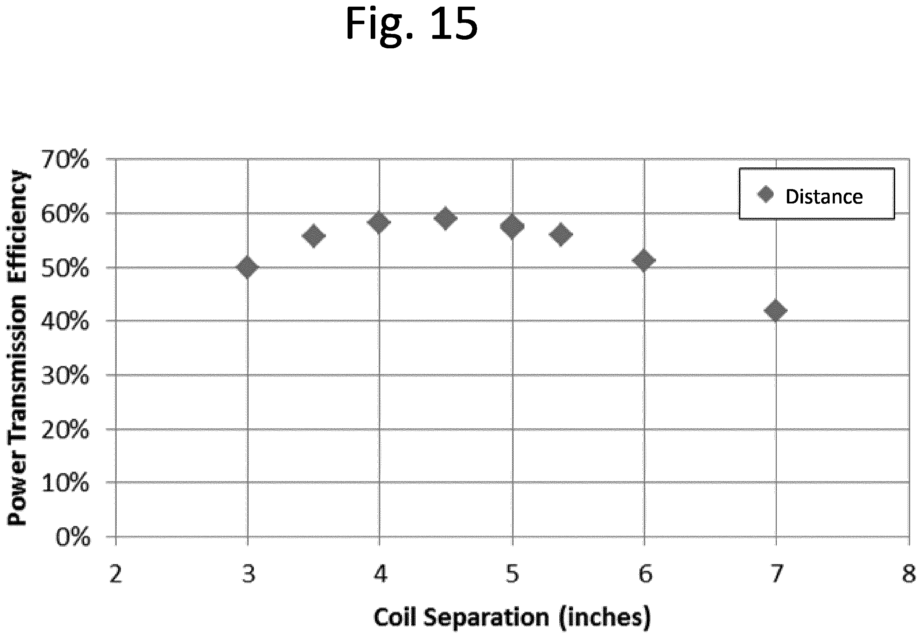

The efficiency of energy transfer as a function of the separation distance between the source and device resonators is shown in Fig. 15. The graph shows that even though the resonators were tuned for a fixed distance of 12 cm the efficiency of energy transfer remain above 50% for the variation of separation distance of 7.5 cm to 15 cm.

In embodiments the captured energy may be used to power any number of devices, sensors, electronics, communication equipment and the like on or around the head or on the helmet. The electrical energy from the device resonator may be used directly as AC current or may be conditioned or rectified to provide DC current. In embodiments the system may include a small energy storage element on the helmet or on the head that is charged from the energy captured by the device resonator. The energy storage may be a rechargeable battery or a super capacitor that may be used to provide energy to the devices in cases when the wireless energy transfer gets interrupted. For example if the user rotates his head to reach the null point in the resonator coupling the wireless energy transfer may be interrupted. During this time power delivery to the electronics may be continued by using energy in the small battery or super capacitor. The energy storage element may be sized according to the expected or maximum time of wireless energy interruption for a specific use scenario. For example, use studies may be conducted to examine the frequency and amount of time that a user may turn his head to an area where the wireless energy transfer is no longer effective. The energy storage element may be sized only to provide energy to the devices during those times and recharge when wireless energy transfer is again possible. The energy storage element may therefore be small or light weight compared to a battery that is expected to power the devices continuously.

In other embodiments the source resonators and the device resonators may be configured to reduce or eliminate dead spots within the range of the person's head mobility. In one exemplary embodiment, multiple source resonators may be used as wireless energy sources. The multiple source resonators may be selectively driven depending on the rotation of the head. The source resonator with the strongest coupling may only be activated or some or all of the source resonators may be driven with oscillating currents with different phase or amplitude to steer the magnetic fields.

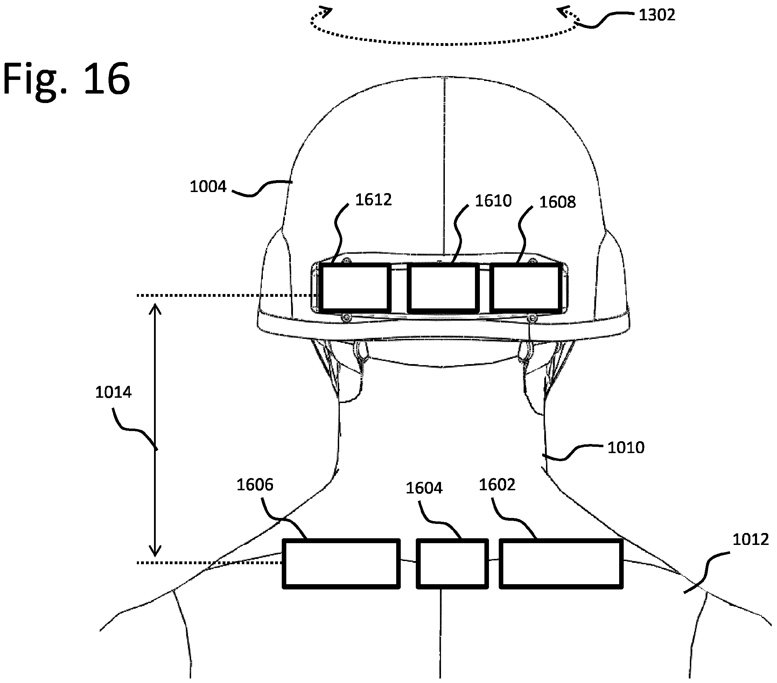

In one exemplary embodiment, multiple device resonators 1612, 1610, 1608 may be used to capture the energy from one or more source resonators 1606, 1604, 1602 as depicted in Figure 16. The multiple device resonators may be selectively activated depending on the rotation 1302 of the head. Only the device resonator with the strongest coupling to the source may be activated or all three or more device resonators may be
activated and their captured electrical energy combined to charge a battery or power an electronic device. The system may include a controller to measure the efficiency of energy transfer and electrical characteristics of the energy transfer between the sources and devices. By measuring the voltage and current on the source resonators and voltage and current on the device resonators the controller may actively choose to energize some or all of the sources depending on the measurements.

In embodiments the device or source resonator may be used to charge batteries from an external wireless energy source. The source resonator worn by the person may normally be used to transfer energy to the helmet but may be configurable to also capture energy from an external source allowing the resonator to wirelessly recharge the central person worn battery. The source resonator worn by the person may be configured to become a device resonator. The electronics may be configurable from a source amplifier functionality to rectifier and battery charger functionality. External source resonators may be mounted inside vehicles, on the back of seats, beds, and other structures providing wireless energy to the resonator mounted on the person when the person is sitting in the vehicle, resting in a bed, and the like.

In embodiments source resonators may be located on the shoulders, back, front, neck, chest, stomach, hips, buttocks, thighs, hands, feet, and arms of the person. Device resonators capable of capturing the energy may be positioned on the sides, back, top and the like of the helmet, head, and head-worn devices. The device resonators may be positioned on the outside of the helmet or may be configured to cover the inside of the helmet protecting it from external abrasions and damage.

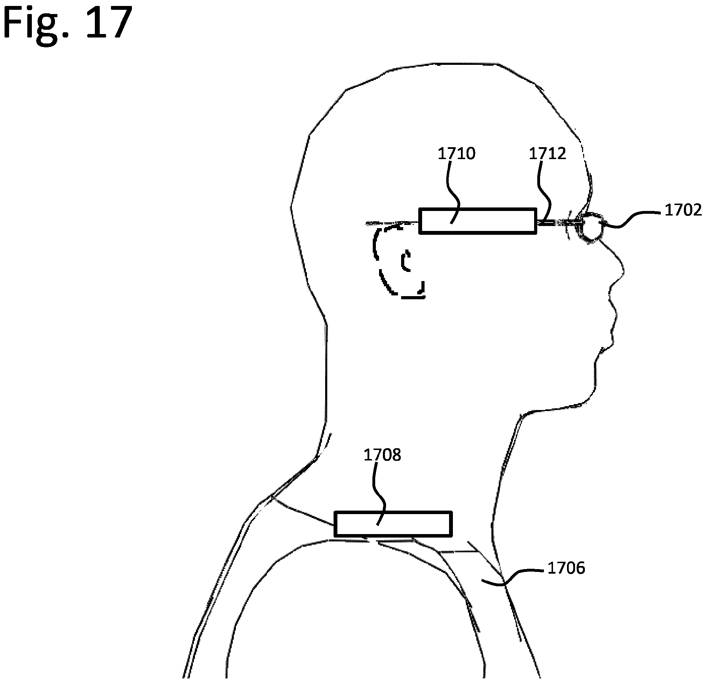

Although the example embodiment demonstrated the use of a wireless energy transfer system from a vest to a helmet, it should be understood that other
configurations are within the scope of this design. Energy may be transferred from a person to any number of peripherals that may be carried, or attached to a person. For example energy may be transferred to glasses, heads up displays, portable monitors and the like. An example embodiment for wireless energy transfer to a glasses mounted heads up display is shown in Fig. 17. The heads up display may have a device resonator 1710 mounted on the side or the temple area 1712 of the glasses 1702. The source resonator 1708 may be worn on the shoulder area of the person. The source resonator 1708 may be energized from a person worn battery that may be carried on the back or side of the person eliminating a heavy battery or energy storage element from the glasses.

In other embodiments energy may be transferred from a vest to a device carried by the user such as a weapon, computer, tool, and the like. Energy may be transferred from the legs to shoes that may be integrated with sensors for monitoring the persons' foot health, or overall fitness and stability by measuring stride length, pressure, movement and the like.

Likewise, although the exemplary embodiment was described using a military helmet those skilled in the art will appreciate that the design may be configured for any helmet or any head mounted structure for recreational, industrial, and other uses. For example, wireless energy transfer may be used for motorcycle helmets to power radios, lights, and instruments inside the helmet. In another example wireless energy transfer may be used in bicycle helmets to transfer energy from a backpack to a helmet fitted with lights. In another example, wireless energy transfer may be used for hard hats to power lights, radios, sensors, glasses and the like.

In embodiments wireless energy transfer for person worn peripherals, a system may include a separate device resonator for each electronic device. Having an independent resonator for each device may allow simpler power control. Each device may be able to control its resonator and detune the resonator from the resonant frequency of the source if it is off or not requiring power. In some embodiments the device resonators may be imbedded in the devices requiring power. In other embodiments a single source resonator may power many device resonators.

In other embodiments the device resonators may be separate from the devices. The device resonator may be located separately from the device requiring power. The energy captured by the device resonator may be transferred to the device via conductor wire. A separate wired device resonator may be placed away from the device in a location closer to a source resonator or in a location that is less obtrusive to the user. For example, in the helmet embodiment shown in Fig. 10, the device resonator 1002 is located at a distance away from the headlamp 1008 and energy is transferred to the headlamp from the device resonator via a wire (not shown). In this embodiment the device resonator was positioned to reduce inconvenience and obstruction to the user.

In some embodiments a single device resonator may deliver power to more than one electronic device. In embodiments energy transfer may be divided into regions or subsystems. For example, wireless energy transfer may be used to span moving human parts or areas where wires are cumbersome or ineffective and once transferred wirelessly may be distributed in a traditional means using electrical conductors such as wires, printed circuit board (PCB) traces, conductive textiles, and the like. For example, a helmet may be such a subsystem. A single device resonator may wirelessly receive energy and distribute the energy to multiple devices on the helmet or near the helmet using wires. Other such systems may include hands, shoes, feet, arms, and the like. In embodiments a subsystem may include more than one device resonator that may receive wireless energy from more than one source resonator and distribute the energy over one or more devices in the subsystem.

In embodiments the device resonators may be embedded in the batteries or the battery packs of the devices. The batteries of devices may be configured for wireless energy transfer allowing the batteries to be recharged when within range of a wireless energy source. For example, sample designs of wireless power enabled batteries are described in U.S. patent application 13/534,966 published on as and entitled "Wireless Energy Transfer for Rechargeable Batteries".

In embodiments the person worn energy transfer system may include safety precautions. The oscillating magnetic fields may cause localized tissue heating or induced currents in some types of tissues. Depending on the location and orientation of the resonators it may be important to limit the power output of the source resonators or the magnitude of the magnetic fields reaching the body tissue or the nervous system of the user. In the example system shown in Fig. 13, five watts was safely transferred to the device resonators while meeting all safety limits despite being close to the spinal cord and nervous system tissue of the user. To meet safety limits it may be preferable to operate the resonators at resonant frequencies at higher frequencies of 150kHz or more. In some embodiments resonant frequencies and the frequencies of the generated magnetic fields may be 1MHz or more.

In embodiments the system may include shielding material around high power (10W or more) source of device resonators to limit or reduce the interactions of the magnetic fields used for energy transfer with the person's body parts. The shielding may comprise a good electrical conductor. The electrical conductor shield may be positioned against a portion of the user's body such that the magnetic fields of the source are deflected away from that portion of the user's body. In embodiments the shield may comprise a flexible electrical conductor. The conductor may be a thin sheet of copper or an electrically conductive textile for example.

Going back to the example of wireless energy transfer to a helmet as shown in Fig. 13, the system may include a shield to reduce the interactions of the fields with the back of the neck, spice, and head. In embodiments that may require higher power transfer, 10W or 20 W or more the system may include a flexible or rigid flap that covers the neck area 1304 of the user. The flap may comprise a conductive material that shields the neck and spinal cord from the magnetic fields. The flap map be part of the helmet or part of the headwear of the user. In embodiments the shield may be part of the collar of the user's clothing.

In embodiments a camera system or machine vision system may detect, or help to detect obstructions and foreign objects and/or materials between the source and device resonators. In embodiments the camera and machine vision system may constantly monitor the gap and/or vicinity around the source and device for movement, extraneous objects, or any type of undefined or abnormal operating environments or configurations. The system may be designed to stop power or limit power transfer and may be designed to alert the driver, user, or operator when any undefined or abnormal operating environments or configurations are detected by the camera and/or algorithms. In embodiments the camera and machine vision system may be coupled or controlled with self learning or trainable algorithms that can be designed to function in or with a wide variety of environments, vehicles, sources, and systems and may learn or be trained to operate in many environments after periods of supervised operation.

In embodiments the camera may be mounted in or around the source and may transmit video or processed information wirelessly to electronics or users inside or outside the vehicle. In embodiments the camera may be mounted on the car and may be mounted under the car. In embodiments the camera may be fitted with an automated door or housing that opens only when the alignment procedure is initiated or when the device or source are in close proximity. The mechanical door or housing may open and close only as needed protecting the camera lens and electronics from road debris, water, dirt, and the like.

In embodiments, transmitted and/or reflected acoustic, microwave, RF, optical, and the like signals may be used to automatically, or with the help of a user, align source and device resonators to within a specified accuracy. The specified accuracy may be a user settable parameter or it may be a parameter that is set by a control system. The settable parameter may be adjusted depending on the time of day, the demand on the electric grid, the cost of electricity (quoted in kW hours for example), the availability of green energy and the like. The settable parameter may be controlled by a utility provider, by a local agency, by the car company, by a services company, by an individual user, and the like.

In embodiments various sensor systems may be used to aid or automate source and device resonator alignment. Acoustic, pressure, contact, inductive, capacitive, and the like sensors may be located in or around the vehicle to determine the vehicles position and guide the user of operator of the vehicle to establish the best alignment. Various bumpers, lasers, balls, whistles, scrapers, strings, bells, speakers, and the like may also be used as indicators to the users or operators for proper alignment positioning. In embodiments any number of parking guides, or parking assistant devices may be incorporated into the system to help guide or position the vehicle in proper or within the acceptable limits of the source.

In embodiments one or more pressure, temperature, capacitive, inductive, acoustic, infrared, ultraviolet, and the like sensors may be integrated into the source, device, source housing, vehicle, or surrounding area and may detect, or help to detect obstructions and foreign objects and/or materials between the source and device resonators. In
embodiments the sensors and safety system may constantly monitor the gap and/or vicinity around the source and device for movement, extraneous objects, or any type of undefined or abnormal operating environments or configurations. In embodiments, for example, the housing covering the source resonator may include or may be mounted on top of a pressure sensor that monitors the weight or forces pushing on the enclosure of the source resonator. Extra pressure or additional detected weight, for example, may indicate a foreign or unwanted object that is left on top of the source indicating that it may be unsafe or undesirable to operate the wireless power transfer system. The output of the sensor may be coupled to the processing elements of the wireless power transfer system and may be used to stop or prevent wireless power transfer or prevent when the sensor is tripped or detects abnormalities. In embodiments the system and sensor may be coupled to auditory, visual, or vibrational indicator to alert the user or operator of the wireless power transfer interruption. In some embodiments multiple sensors, sensing multiple parameters may be used
simultaneously to determine if an obstruction or a foreign object is present. In some embodiments the system may be configured such that at least two sensors must be tripped, such as a pressure and a temperature sensor, for example, to turn off or prevent the wireless power transfer.

In embodiments a theft deterrent or detection system may be incorporated into the source and device that utilizes the various sensors and cameras of the wireless power transmission system to detect unauthorized use of the vehicle.

In embodiments the source and device resonators may be of non-identical dimensions and geometries to reduce the dependence on alignment of the efficiency of power transfer between source and device coils. In some embodiments it may be beneficial to make the source resonator larger than the device resonator which may increase the positional tolerance for a desired energy transfer efficiency between the source and device resonators.

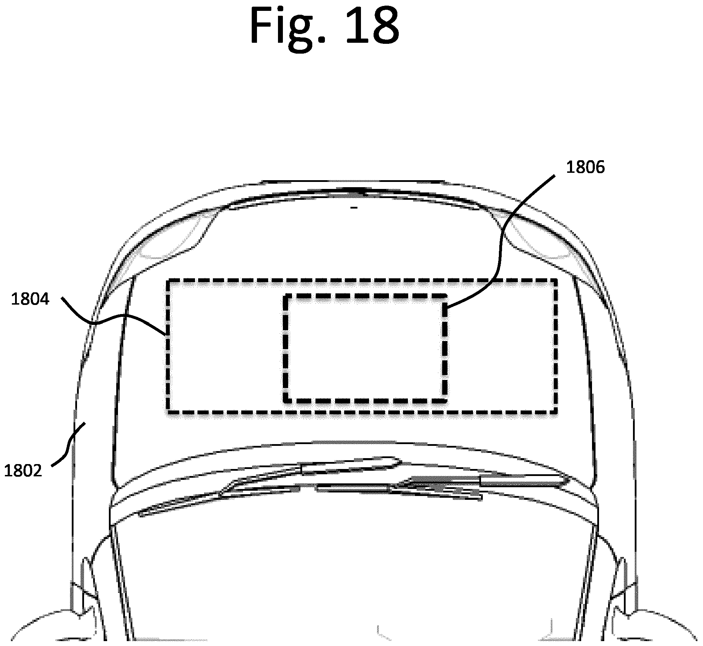

In embodiments various geometries of source and device resonators may be used to reduce the effects of source and device misalignments, such as those that may be associated with parking variations. Parking variations may include forward and back variations, side -to-side variations, angular offsets (when the vehicle is parked at an angle), and the like. For example, in some embodiments the source and device resonators may be prone to variations in alignment in the forward and backward direction of the vehicle. In such embodiments, the use of rectangular source inductive loop, oriented with the long axis of the inductive loop parallel to the direction of vehicle positional uncertainty-paired with a square device resonator having the same short axis length as the source resonator may yield a better average efficiency as a function of source-to-device resonator displacement than would be achieved by a square source resonator with the same dimensions as the device resonator. Note that the long axis of a rectangular source inductive loop may be aligned with the length of the vehicle, if the positional uncertainty is in that direction and may be aligned with the width of the vehicle if side-to-side positional uncertainty is expected. An exemplary embodiment, showing the relative geometries of a source and a device inductive loop for reducing lateral or side-to-side offset dependency on the vehicle is shown in Figure 18. The figure shows exemplary relative geometries from the top perspective looking down at the car when the source resonator is located below the car and the device resonator is mounted to the underside of the car. To increase the side to side offset capability of the car 1802 the capacitively loaded loop resonators comprising the source and the device may be of different dimensions. The dimensions of the source 1804 may be larger in the in the side to side dimension or axis of the car than the dimensions of the device 1806.

In embodiments the effects of misalignment between a source and a device may be mitigated or limited with resonator designs that do not require precise alignment. In embodiments the source and device resonator may include planar resonators or resonators comprising a conductor wrapped around a core of magnetic material. In embodiments the dipole moment of the planar resonators may be oriented perpendicular to the dimension of vehicle position uncertainty. The design of the resonators may allow misalignments perpendicular to the dipole moments of the resonators with minimal effects of power transfer efficiency.

In embodiments, device resonators and their respective power and control circuitry may have various levels of integration with other electronic and control systems and subsystems of a vehicle. In some embodiments the power and control circuitry and the device resonators may be completely separate modules or enclosures with minimal integration to existing systems of the vehicle, providing a power output and a control and diagnostics interface to the vehicle. In other embodiments the device resonator or parts of the resonator housing may be integrated into the body, structure, undercarriage, panels of the vehicle. In some embodiments the vehicle may be configured to house a resonator and circuit assembly in a recess area underneath the vehicle making the bottom face of the coil enclosure flush with the underbody. In some embodiments the recessed area may be further lined with a highly conductive material such as aluminum, copper, silver and the like which may electroplated, laminated, sprayed, applied, and the like to the recessed area.

In embodiments the device and source may include active cooling or heating. The device resonator and circuitry may be integrated into a vehicle's cooling system to prevent high temperatures in high power applications. In embodiments the device resonator and circuitry may include its own active cooling or heating system with radiators, fans, liquid coolant, and the like. In embodiments the resonators and power and control circuitry may include various shapes, profiles, protrusions, heat sinks, and the like to aid in temperature control.

In wireless power systems the vehicle power control system may include a power station reservation system that allows users to reserve charging stations for specific times of the day preventing others users from charging from the source. Central information may be used to let users choose specific power sources or sources which use more environmentally friendly sources of energy such as wind or solar power.

In embodiments the device resonator of a vehicle may also be used as a power source. In embodiments vehicle power may be used to power a building during a blackout or a cabin without power. In embodiments the vehicle may be used to transmit power to construction vehicles or tools at a job site.

### Resonator Arrays

In embodiments two or more smaller resonators or two or more blocks of magnetic material wrapped with conductor may be arranged to form a larger resonator with an effective size that is larger than the physical size of the smaller resonators or larger than the size of the blocks of magnetic material. A resonator with a larger effective size may have improved coupling over a larger distance, may have a higher efficiency, improved invariance with respect to positional uncertainty, may be able to transfer higher power levels, and the like. An arrangement of smaller resonators or smaller blocks of magnetic material may offer advantages over a single large resonator with respect to manufacturability, cost, scalability, variability, and the like.

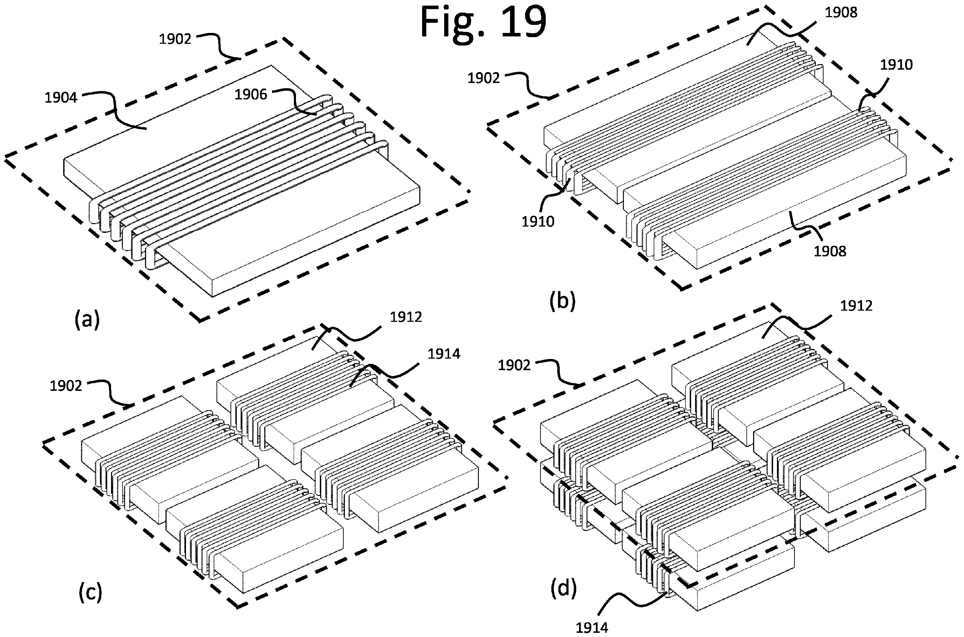

For example, in embodiments as shown in Figure 19(a) a planar resonator comprising a conductor 1906 wrapped around a block of magnetic material 1904 may be implemented using one single resonator or one block of magnetic material. The resonator may comprise a substantially continuous block of magnetic material 1904 with a conductor 1906 wrapped around the complete width of the magnetic material forming loops with an enclosed area that are substantially equal to the cross section of the block of magnetic material. The resonator may have an effective size 1902 that is substantially equal to the physical dimensions of the resonator.

In other embodiments, a planar resonator may be implemented using an arrangement of two or more smaller resonators or blocks of magnetic material. These smaller resonators may comprise smaller blocks of magnetic material wrapped by conductors forming loops with enclosed areas that are substantially equal to the cross sectional area of the blocks of magnetic material. As depicted in an example embodiment in Figure 19(b), two smaller blocks of magnetic material 1908, each wrapped with a conductor 1910 may be arranged side by side to create a resonator with an effective size 1902 that is substantially equal to the physical dimensions of the arrangement of the two blocks of magnetic material. In embodiments, more than two blocks of magnetic material, each comprising a conductor 1914 wrapped around the blocks 1912, may be arranged in two or three dimensional arrays as depicted in Figures 94(c-d) to create a larger effective resonator that has an effective size 1902 that is substantially equal to the physical dimensions of the arrangement of the blocks of magnetic material. The arrays of smaller resonators may be sized and arranged to create an array with the desired effective size and shape and the array may be used instead of a resonator comprising a single substantially continuous block of magnetic material.

In embodiments each block of magnetic material wrapped with a conductor may be treated as a separate resonator and may be coupled to additional electrical elements such as capacitors or inductors for parameter adjustment of each individual block. In other embodiments some or all of the conductors wrapped around the blocks of magnetic material may be connected together and coupled to additional electrical elements such as capacitors, inductors, and the like to make the complete arrangement of blocks of magnetic material and conductors a single resonator. In embodiments, the multiple smaller inductive or resonator structures may be connected in series, or in parallel, or in a network of serial and parallel connections.

In some embodiments, an arrangement of smaller resonators or arrangements of smaller blocks of magnetic material wrapped with a conductor may offer advantages over a single large resonator with respect to manufacturability, cost, scalability, variability, and the like. Magnetic materials are often brittle and a large continuous piece of magnetic material of the resonator, especially for a large resonator, may be susceptible to damage and cracking. Smaller arrays of resonators may be more resistant to vibrations and damage as it may be easier to isolate, reinforce, package, and the like the smaller separate blocks of magnetic material. Likewise, resonators comprising arrays of separate blocks of magnetic material wrapped with a conductor may be more scalable or expandable. A resonator array may be made larger or smaller by adding or removing individual resonator elements or adding or removing individual blocks of magnetic material from the array to increase or decrease the effective size of the resonator depending on the application or deployment configuration. Such arrangements may have advantages in that a large range of resonator effective sizes and shapes may be realized by assembling multiple smaller resonators. Then, a single or a few standard resonators may be stocked, tested, manufactured in volume, and the like, and used to support a wide variety of resonator sizes and shapes supplied for wireless power transfer systems.

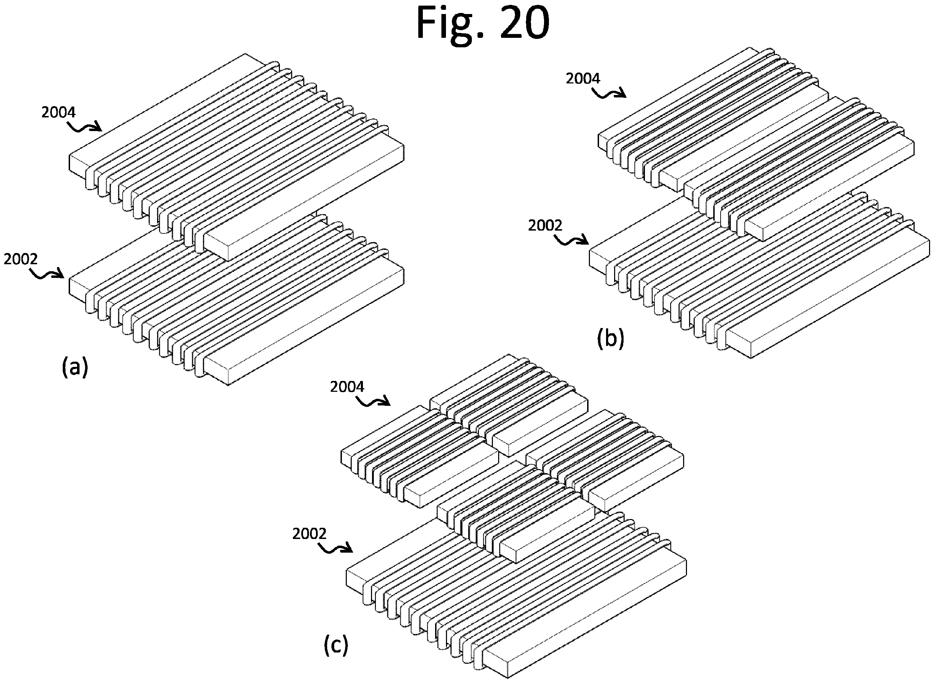

In embodiments, resonators comprising arrangements of smaller resonators or arrangements of blocks of magnetic material may have substantially the same or similar system parameters and wireless power transfer characteristics as a resonator with a larger, substantially continuous piece of magnetic material and may be used to replace or substitute resonators with a larger, substantially continuous piece of magnetic material without a significant impact on the performance or characteristics of wireless power transfer. In one embodiment of a wireless power transfer configuration, the parameters of wireless power transfer between a source and a device were calculated and compared using finite element method models for arrangements for which the device resonator 2004 was implemented as a conductor wrapped around a single substantially continuous blocks of magnetic material (Figure 20(a)), for which the device resonator 2004 was implemented as two conductors wrapped around two equally sized blocks of magnetic material (Figure 20(b)), and for which the device resonator 2004 was implemented as four conductors wrapped around four equally sized blocks of magnetic material (Figure 20(c)). In each configuration of the device, the effective size of the resonator was maintained at 30 cm by 32 cm and was aligned directly 20 cm above a 30 cm by 32 cm source resonator 2002 comprising a conductor wrapped around a substantially continuous block of magnetic material. In the configuration where the device resonator comprises a single block of magnetic material as shown by 2004 in Figure 20(a), the quality factor of the effective device resonator was calculated to be 450, and the coupling factor k between the source and the device was calculated to be 0.124, resulting in a predicted wireless power transfer efficiency of 96.4% between the source and the device. In the configuration where the device resonator comprises two smaller blocks of magnetic material wrapped with a conductor and separated by a 0.1 cm gap of air, as shown by 2004 in Figure 20(b), the quality factor of the effective device resonator was calculated to be 437, and the coupling factor k between the source and the device was calculated to be 0.115 resulting in a predicted wireless power transfer efficiency of 96.2% between the source and the device. In the configuration where the device resonator comprises four smaller blocks of magnetic material wrapped with conductors separated by a 0.2 cm air gap, as shown in Figure 20(c), the quality factor of the effective device resonator was calculated to be xxx, the coupling factor k between the source and the device was calculated to be 0.109 resulting in a predicted wireless power transfer efficiency of 96%> between the source and the device.

In embodiments, the parameters of the arrangement of resonators comprising smaller blocks of magnetic material may be affected by the orientation, positioning, arrangement, and configuration of the blocks of magnetic material, the conductor, and the like. One factor found to be of importance is the separation distance between the resonators and the smaller blocks of magnetic material that may comprise a resonator with a larger effective area. For example, consider a resonator with a large effective area comprising four separate smaller resonators with separate blocks of magnetic material is depicted in Figure 96. The size of the separation distances, labeled as A and B in the figure, may affect the parameters of the resonator and the efficiency of wireless power transfer. For example, for the configuration and orientation depicted in Figure 20(c) and described above, changing both dimension A and dimension B from 0.2 cm to 2cm reduced the efficiency of wireless power transfer from the source to the device from 96% to 94.8%.

In embodiments it may be preferable to minimize the gaps between the blocks of magnetic material, and may be especially preferable for gaps that are not parallel to the axis of the dipole moments 2102 of the resonators. In embodiments the size of an acceptable or preferable air gap may be dependent on the overall or effective size of the larger resonator, the size of the individual small resonators, power levels, and the like. In embodiments it may be preferable to ensure that the gaps between the blocks of magnetic material be smaller than 10% of the largest dimension of the effective size of the resonator arrangement. In embodiments it may be preferable to ensure that the gaps between the blocks of magnetic material be smaller than 10% of the smallest dimension of the effective size of the resonator.

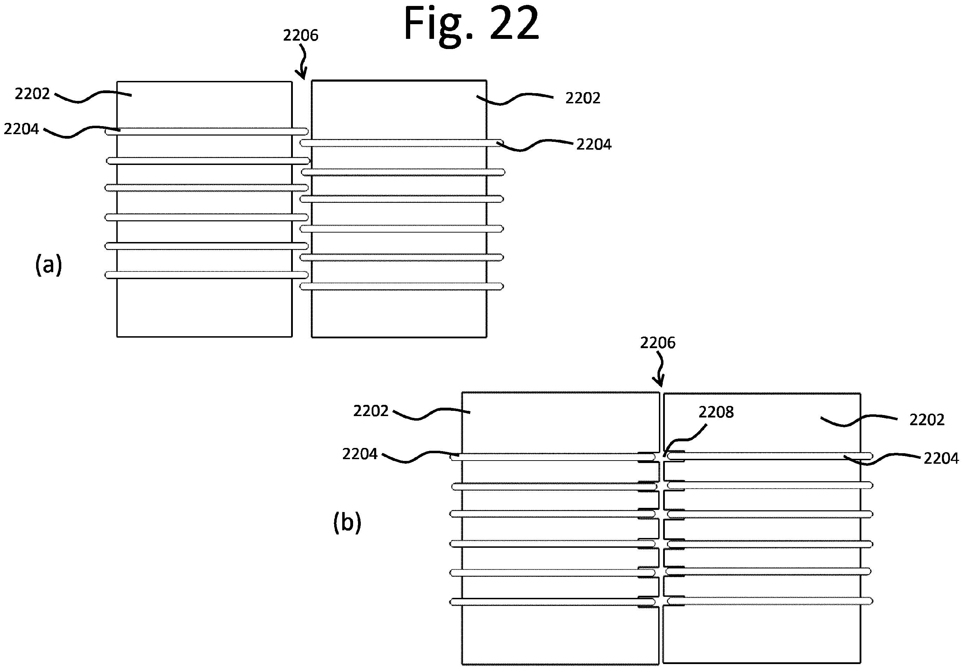

In embodiments, the individual smaller resonators or individual blocks of magnetic material wrapped with a conductor and comprising the effective larger resonator may include features, shapes, designs, notches, and the like to enable smaller separation gaps between the smaller blocks of magnetic material or the smaller resonators. In some embodiments, the gap 2206, as shown in Figure 22, between adjacent resonators may be reduced reduced by staggering the conductor windings 2204 of the adjacent resonators and allowing a conductor of a neighboring resonator to fit between adjacent windings of the conductor of an another resonator as shown in Figure 22(a). In some embodiments the blocks of magnetic material 2202 may be shaped and may have indentations, notches, holes, and the like 2208 to generate an indentation for the conductor 2204 allowing neighboring blocks of magnetic material to come close together and have a separation 2206 that may be smaller than the thickness of the conductor 2204 as shown in Figure 22(b).

In embodiments the gaps between the resonators may be filled completely or partially with magnetic material blocks, powder, epoxy, and the like. In some
embodiments the magnetic material may be different from the blocks of magnetic material that comprise the smaller resonators. In some embodiments it may be preferable to use a flexible form of magnetic material which may prevent or reduce vibration or shock transfer between resonators.

In embodiments each of the smaller blocks of magnetic material comprising a larger effective resonator may be wrapped with separate pieces of conductors and coupled to separate tuning and matching networks. Each block of magnetic material with a wrapped conductor may be an individual resonator and may be tuned or adjusted
independently from the other resonators. In embodiments each resonator or groups of resonators may be coupled to separate power and control circuitry which may be
synchronized with an oscillator or clock to ensure all resonators and power and control circuitry are operating at the same frequency and phase or at predetermined frequencies and phase offsets. In embodiments a single power and control circuitry may be used for all of the resonators and, in the case of a source, may drive all the resonators in parallel with an oscillating voltage, or in the case of a device, one power and control circuitry may capture and convert the oscillating voltage on each resonator conductor.

In embodiments a single conductor may be used to sequentially wrap all or groups of blocks of magnetic material of the resonator. A conductor may be wrapped around one block of magnetic material and then wrapped around a second and so on providing a series connection between the conductors around multiple blocks of magnetic material. In such embodiments a single power and control circuitry may be used to energize the conductor with oscillating current.

In embodiments the individual smaller resonators and blocks of magnetic material that comprise the resonator arrangement may all have substantially equal
dimensions. In other embodiments the blocks of magnetic material may be non-uniform and may have varying thickness or irregular shapes.

In embodiments, the individual smaller resonators or individual blocks of magnetic material wrapped with a conductor comprising the effective larger resonator may all be wrapped such that all the loops formed by the conductor are coaxial or such that the axis of all the loops formed by the conductors are all parallel. In other embodiments, the conductors may be wrapped such that not all the axes of the loops formed by the conductors are parallel. Some blocks of magnetic material may be wrapped or arranged such the conductor forms loops with an axis that is perpendicular to other loops of other conductors and may be used to form a larger effective resonator that has, or has the capability of having a magnetic dipole moment in more than one direction.

In embodiments a resonator comprising an arrangement of smaller blocks of magnetic material may include blocks of magnetic material without a wrapped conductor.

In embodiments of a resonator comprising an arrangement of smaller blocks of magnetic material or smaller resonators the conductors may be selectively energized or activated depending on the power levels, distances, magnetic field limits, and the like during wireless power transfer. In embodiments, for example, a source resonator comprising an arrangement that includes multiple conductors may energize one or only a
portion of the conductors when low levels of wireless power transfer are required and may energize most or all of the conductors when high levels of wireless power transfer are required.

In some embodiments different conductors or different numbers of conductors may be energized depending on the relative location of a source and a device including distance or lateral offset. For example, in embodiments for a vehicle charging application, where the source resonator may be of a larger dimension than the device resonator as shown in Figure 18, the source resonator may comprise smaller blocks of magnetic material or smaller resonators for which only the blocks and conductors that are directly below the device resonator may be energized. In such an embodiment the source and device resonators may tolerate greater lateral offset while ensuring that the strongest magnetic fields are always confined to the area below the device resonator.

It is to be understood that any description of blocks of magnetic material, small or large, may refer to blocks that comprise a single monolithic block, tile, structure, crystal, sheet, square, shape, form, and the like, of magnetic material or may comprise any combination of separate smaller blocks, tiles, structures, crystals, sheets, squares, shapes, forms, and the like, of similar or different types of magnetic material that are attached, packed, assembled or secured together to form a substantially continuous form.

## Claims

1. A wirelessly chargeable battery assembly comprising:
a first wirelessly chargeable battery structure and a second wirelessly chargeable battery structure, each wirelessly chargeable battery structure comprising:
an enclosure symmetrical about an axis, the enclosure having a first end and a second end with a positive terminal (702; 704) on the first end and a negative terminal on the second end;
a rechargeable battery (710);
a magnetic material (708) configured to house the rechargeable battery (710);
a magnetic resonator configured to receive wireless energy through oscillating magnetic fields and comprising a capacitively-loaded conductor forming a plurality of loops (706; 712), wherein the magnetic material (708) is at least partially encircled by the plurality of loops;
wherein the magnetic material (708) and the conductor forming a plurality of loops (706; 712) are positioned asymmetrically in the enclosure with respect to the first and second ends; and
wherein the first and second wirelessly chargeable battery structures are predictably positioned in close proximity relative to one another in the assembly and in an antiparallel arrangement with negative and positive terminals (702; 704) opposed.

2. The wirelessly chargeable battery assembly of claim 1, wherein the magnetic resonators of the first and second wirelessly chargeable battery structures are each configured to receive energy through oscillating magnetic fields generated by at least one of an external source and one or more additional resonators acting as repeaters.

3. The wirelessly chargeable battery assembly of claim 1, further comprising at least one control circuit positioned within the enclosure of the first wirelessly chargeable battery structure, wherein during operation of the assembly, the at least one control circuit of the first wirelessly chargeable battery structure is configured to actively adjust at least one of a frequency, an inductance, a resistance, and a capacitance of one or more elements of the magnetic resonator of the first wirelessly chargeable battery structure to compensate for coupling between the magnetic resonators of the first and second wirelessly chargeable battery structures.

4. The wirelessly chargeable battery assembly of claim 1, wherein the magnetic resonator of each of the first and second wirelessly chargeable battery structures contacts one of the first and second ends and does not contact the other end of the enclosure.

5. The wirelessly chargeable battery assembly of claim 1, wherein the enclosure has a cylindrical shape.

6. The wirelessly chargeable battery assembly of claim 1, wherein the enclosure has exterior dimensions that correspond to a form factor of one of: an enclosure of a AA battery, an enclosure of a AAA battery, and an enclosure of a D battery.

7. The wirelessly chargeable battery assembly of claim 1, wherein the plurality of loops of the conductor are formed on a flexible substrate.

8. The wirelessly chargeable battery assembly of claim 1, wherein during operation, the magnetic resonator of each of the wirelessly chargeable battery structures is configured to capture energy transmitted by an oscillating magnetic field and to store a portion of the captured energy in the rechargeable battery.

9. The wirelessly chargeable battery assembly of claim 1, wherein a coupling between the magnetic resonators of the first and second wirelessly chargeable battery structures, as defined by a coupling factor k, is 20% or less of a maximum coupling between the magnetic resonators for any orientation of the magnetic resonators in close proximity.

## Patentansprüche

1. Drahtlos-aufladbare-Batterie-Baugruppe, die Folgendes umfasst:
eine erste Drahtlos-aufladbare-Batterie-Struktur und eine zweite Drahtlos-aufladbare-Batterie-Struktur, wobei jede Drahtlos-aufladbare-Batterie-Struktur Folgendes umfasst:
ein Gehäuse, symmetrisch um eine Achse herum, wobei das Gehäuse ein erstes Ende und ein zweites Ende aufweist, mit einem positiven Anschluss (702; 704) an dem ersten Ende und einem negativen Anschluss an dem zweiten Ende;
eine wiederaufladbare Batterie (710);
ein magnetisches Material (708), das ausgelegt ist zum Beherbergen der wiederaufladbaren Batterie (710);
einen magnetischen Resonator, der ausgelegt ist zum Empfangen drahtloser Energie über ein oszillierendes Magnetfeld, und der einen kapazitiv belasteten Leiter umfasst, der mehrere Schleifen (706; 712) ausbildet, wobei das magnetische Material (708) zumindest teilweise durch die mehreren Schleifen eingekreist ist;
wobei das magnetische Material (708) und der mehrere Schleifen (706; 712) ausbildende Leiter in dem Gehäuse bezüglich dem ersten und dem zweiten Ende asymmetrisch positioniert sind; und
wobei die erste und die zweite Drahtlos-aufladbare-Batterie-Struktur in der Baugruppe in großer Nähe relativ zueinander vorhersehbar und in antiparalleler Anordnung mit entgegengesetztem negativem und positivem Anschluss (702; 704) positioniert sind.

2. Drahtlos-aufladbare-Batterie-Baugruppe nach Anspruch 1, wobei die magnetischen Resonatoren der ersten und der zweiten Drahtlos-aufladbare-Batterie-Struktur jeweils ausgelegt sind zum Empfangen von Energie über oszillierende Magnetfelder, die durch eine externe Quelle und/oder einen oder mehrere zusätzliche Resonatoren, die als Wiederholer fungieren, erzeugt werden.

3. Drahtlos-aufladbare-Batterie-Baugruppe nach Anspruch 1, die ferner mindestens eine Steuerschaltung umfasst, die innerhalb des Gehäuses der ersten Drahtlos-aufladbare-Batterie-Struktur positioniert ist, wobei während Betriebs der Baugruppe die mindestens eine Steuerschaltung der ersten Drahtlos-aufladbare-Batterie-Struktur ausgelegt ist zum aktiven Einstellen einer Frequenz und/oder einer Induktivität und/oder eines Widerstands und/oder einer Kapazität von einem oder mehreren Elementen des magnetischen Resonators der ersten Drahtlos-aufladbare-Batterie-Struktur, um Kopplung zwischen den magnetischen Resonatoren der ersten und der zweiten Drahtlos-aufladbare-Batterie-Struktur zu kompensieren.

4. Drahtlos-aufladbare-Batterie-Baugruppe nach Anspruch 1, wobei der magnetische Resonator von jeder der ersten und der zweiten Drahtlos-aufladbare-Batterie-Struktur das erste oder das zweite Ende kontaktiert und das andere Ende des Gehäuses nicht kontaktiert.

5. Drahtlos-aufladbare-Batterie-Baugruppe nach Anspruch 1, wobei das Gehäuse eine zylindrische Gestalt aufweist.

6. Drahtlos-aufladbare-Batterie-Baugruppe nach Anspruch 1, wobei das Gehäuse Außenabmessungen aufweist, die einem Formfaktor eines der Folgenden entsprechen: eines Gehäuses einer AA-Batterie oder eines Gehäuses einer AAA-Batterie oder eines Gehäuses einer D-Batterie.

7. Drahtlos-aufladbare-Batterie-Baugruppe nach Anspruch 1, wobei die mehreren Schleifen des Leiters auf einem flexiblen Substrat ausgebildet sind.

8. Drahtlos-aufladbare-Batterie-Baugruppe nach Anspruch 1, wobei während des Betriebs der magnetische Resonator von jeder der Drahtlos-aufladbare-Batterie-Strukturen ausgelegt ist zum Einfangen von durch ein oszillierendes Magnetfeld übertragener Energie und zum Speichern eines Teils der eingefangenen Energie in der wiederaufladbaren Batterie.

9. Drahtlos-aufladbare-Batterie-Baugruppe nach Anspruch 1, wobei eine Kopplung zwischen den magnetischen Resonatoren der ersten und der zweiten Drahtlos-aufladbare-Batterie-Strukturen, wie sie durch einen Kopplungsfaktor k definiert ist, für beliebige Orientierung der magnetischen Resonatoren in großer Nähe 20% oder weniger einer maximalen Kopplung zwischen den magnetischen Resonatoren beträgt.

## Revendications

1. Ensemble de batterie chargeable sans fil comprenant :
une première structure de batterie chargeable sans fil et une deuxième structure de batterie chargeable sans fil, chaque structure de batterie chargeable sans fil comprenant :
un boîtier symétrique par rapport à un axe, le boîtier comportant une première extrémité et une deuxième extrémité, une borne positive (702 ; 704) étant prévue à la première extrémité et une borne négative étant prévue à la deuxième extrémité ;
une batterie rechargeable (710);
un matériau magnétique (708) conçu pour loger la batterie rechargeable (710) ;
un résonateur magnétique conçu pour recevoir de l'énergie sans fil par le biais de champs magnétiques oscillants et comprenant un conducteur chargé de manière capacitive qui forme une pluralité de boucles (706 ; 712), le matériau magnétique (708) étant au moins partiellement encerclé par la pluralité de boucles ;
le matériau magnétique (708) et le conducteur qui forme une pluralité de boucles (706 ; 712) étant positionnés de manière asymétrique dans le boîtier par rapport aux première et deuxième extrémités ; et
les première et deuxième structures de batterie chargeables sans fil étant positionnées de manière prévisible à proximité immédiate les unes des autres dans l'ensemble et selon un agencement antiparallèle avec des bornes négatives et positives (702 ; 704) opposées.

2. Ensemble de batterie chargeable sans fil selon la revendication 1, les résonateurs magnétiques des première et deuxième structures de batterie chargeables sans fil étant chacun conçus pour recevoir de l'énergie par le biais de champs magnétiques oscillants générés par au moins une source externe et au moins un résonateur supplémentaire agissant comme répéteurs.

3. Ensemble de batterie chargeable sans fil selon la revendication 1, comprenant en outre au moins un circuit de commande positionné à l'intérieur du boîtier de la première structure de batterie chargeable sans fil, pendant le fonctionnement de l'ensemble l'au moins un circuit de commande de la première structure de batterie chargeable sans fil étant conçu pour régler activement au moins une fréquence, une inductance, une résistance et une capacité d'au moins un élément du résonateur magnétique de la première structure de batterie chargeable sans fil pour compenser le couplage entre les résonateurs magnétiques des première et deuxième structures de batterie chargeables sans fil.

4. Ensemble de batterie chargeable sans fil selon la revendication 1, le résonateur magnétique de chacune des première et deuxième structures de batterie chargeables sans fil étant en contact avec l'une des première et deuxième extrémités et n'étant pas en contact avec l'autre extrémité du boîtier.

5. Ensemble de batterie chargeable sans fil selon la revendication 1, le boîtier ayant une forme cylindrique.

6. Ensemble de batterie chargeable sans fil selon la revendication 1, le boîtier ayant des dimensions extérieures qui correspondent à un facteur de forme du : boîtier d'une batterie AA, boîtier d'une batterie AAA et boîtier d'une batterie D.

7. Ensemble de batterie chargeable sans fil selon la revendication 1, la pluralité de boucles du conducteur étant formée sur un substrat flexible.

8. Ensemble de batterie chargeable sans fil selon la revendication 1, pendant le fonctionnement le résonateur magnétique de chacune des structures de batterie chargeables sans fil étant conçu pour capter l'énergie transmise par un champ magnétique oscillant et pour stocker une partie de l'énergie captée dans la batterie rechargeable.

9. Ensemble de batterie chargeable sans fil selon la revendication 1, un couplage entre les résonateurs magnétiques des première et deuxième structures de batterie chargeable sans fil, tel que défini par un facteur de couplage k, étant de 20 % ou moins d'un couplage maximum entre les résonateurs magnétiques pour toute orientation des résonateurs magnétiques à proximité immédiate.
